# EUROPÄISCHE PATENTSCHRIFT

(11) **EP 2 691 934 B1**
(45) Veröffentlichungstag und Bekanntmachung des Hinweises auf die Patenterteilung: **30.09.2015**
(21) Anmeldenummer: 12712965.8
(22) Anmeldetag: 30.03.2012
(51) Int. Cl.: G06F 3/0481, G06T 11/00

(54) **PHANTOMBILDDATENBANK (3D)**
IDENTIKIT DATABASE
IMAGES "IDENTIKIT" AVEC BASE DE DONNEES

(30) Priorität: 31.03.2011 DE 102011015730
(43) Veröffentlichungstag der Anmeldung: 05.02.2014
(73) Patentinhaber: Landeskriminalamt Rheinland-Pfalz, 55118 Mainz am Rhein (DE)
(72) Erfinder: KINN, Uwe, 55126 Mainz (DE)
(74) Vertreter: Müller-Boré & Partner Patentanwälte PartG mbB
(86) Internationale Anmeldenummer: PCT/EP2012/001421
(87) Internationale Veröffentlichungsnummer: WO 2012/130470

(56) Entgegenhaltungen:
- WO-A2-99/27838
- US-A- 4 045 883
- US-A1- 2007 052 726
- BRUNELLI R ET AL: "SpotIt!An Interactive Identikit System", CVGIP GRAPHICAL MODELS AND IMAGE PROCESSING, ACADEMIC PRESS, DULUTH, MA, US, Bd. 58, Nr. 5, 1. September 1996 (1996-09-01), Seiten 399-404, XP004418978, ISSN: 1077-3169, DOI: 10.1006/GMIP.1996.0033
- V. BLANZ ET AL: "Creating Face Models from Vague Mental Images", COMPUTER GRAPHICS FORUM, Bd. 25, Nr. 3, 1. September 2006 (2006-09-01), Seiten 645-654, XP55036592, ISSN: 0167-7055, DOI: 10.1111/j.1467-8659.2006.00984.x
- DAVIES G ET AL: "FACIAL COMPOSITE PRODUCTION: A COMPARISON OF MECHANICAL AND COMPUTER-DRIVEN SYSTEMS", PLANT GENOME CONFERENCE; 20000200, Bd. 85, Nr. 7, 31. Dezember 2000 (2000-12-31), Seiten 119-124, XP009070894,

## Beschreibung

Die vorliegende Erfindung dient der Erstellung von Phantombildern zur Darstellung menschlicher Gesichter unter Verwendung zumindest zweier in ihrer Struktur speziell miteinander verbundenen Teildatenbanken. Damit erreicht man, dass eine Phantombilddarstellung eines Gesichts gleichzeitig in verschiedenen Perspektiven anatomisch konsistent zusammengesetzt werden kann.

Speziell für die Fahndung nach Straftätern haben Phantombilder, die auf Grundlage von Zeugenaussagen oder unter unmittelbarer Mitwirkung von Augenzeugen erstellt werden, eine wichtige Bedeutung. Während früher geübte Zeichner zusammen mit dem entsprechenden Augenzeugen ein Bild eines möglichen Straftäters als Freihandzeichnung erstellt haben, wurde die Erstellung von Phantombildern auf Basis von vorgefertigten Zeichnungselementen in Form einzelner Gesichtsausschnitte mit der Einführung von Computern und der Verwendung großer Datenbanken immer komfortabler und effizienter. Beispielsweise in US 4,045,883 A ist ein herkömmliches mechanisches Identifikations-Kit-System mit fotographischen Bildelementen, das für die wesentlichen Gesichtsmerkmale beispielsweise rechteckige Bildausschnitte bereithält, die miteinander kombiniert werden können. Dabei sind die Bildausschnitte paarweise in Frontal- und Seitenansicht bereitgehalten. Weitere, zum Teil computergestützte Identifikationssysteme sind beispielsweise in US 2007/052726 A1, in BRUNELLI et al: "Spotlt!An Interactive Identikit System" (1996), in WO 99/27838 A2 und in V. BLANZ et al: "Creating Face Models from Vague Mental Images" (2006) beschrieben.

Um auf vorgefertigte Darstellungen einzelner Gesichtsausschnitte zurückgreifen zu können, um sie für die Erstellung von Phantombildern frei miteinander zu kombinieren, müssen diese Darstellungen alle in einer normierten bzw. gleichen Orientierung des Gesichts vorliegen. Beispielsweise ließe sich eine vorgefertigte Augenpartie, welche für eine leichte Kopfneigung nach rechts konzipiert ist, nicht mit einer Nasenpartie kombinieren, die hingegen leicht nach links zeigt. Herkömmlicherweise werden Phantombilder, die auf Basis von Bildteilen aus einer Datenbank erstellt werden, somit einheitlich in einer Ansicht, beispielsweise in der Frontalansicht, dargestellt. Alle einzelnen Bildelemente werden daher in der Frontalausrichtung in einer Datenbank abgelegt und können somit frei miteinander kombiniert werden. Gerade die Frontalansicht liefert oft einen vergleichsweise hohen Wiedererkennungswert. Insbesondere wenn der jeweilige Zeuge beispielsweise ein von einem Verbrechen unmittelbar betroffenes Opfer ist oder der Täter den Zeugen aus anderen Gründen direkt angesehen hat, kann ein Phantombild gerade in der Frontalansicht dem tatsächlichen Täterbild sehr nahe kommen.

Allerdings hängt der Fahndungserfolg mittels eines Phantombildes nicht nur von der möglichst exakten Wiedergabe des Täterbildes ab, sondern auch von dessen Aussagekraft, den Täter damit später in anderen Situationen, beispielsweise auf Videoaufzeichnungen wiedererkennen zu können. Gerade wenn es um einen Vergleich mit Videoaufzeichnungen geht, wäre es oft wünschenswert, zur Fahndung mittels eines Phantombildes nicht auf die herkömmliche Frontalansicht beschränkt zu sein. So ist insbesondere bei Videoaufzeichnungen mittels einer Überwachungskamera der direkte Blick eines Täters in die Kamera eher selten.

Auf der Suche nach einer Lösung dieses Problems wurden im Rahmen der Entstehung der Erfindung verschiedene Konzepte überlegt. Insbesondere für die spätere flexible Verwertbarkeit eines Phantombildes wäre ein vollständig dreidimensionales Modellbild des Täters sehr wünschenswert. Allerdings sind an die vollständig dreidimensionale Erstellung eines Täterbildes nicht unwesentliche Probleme in Bezug auf eine einfache Bedienbarkeit eines entsprechenden Computersystems und gesteigerte Anforderungen an die Rechnerleistung geknüpft.

Aufgabe der vorliegenden Erfindung ist es, die Erstellung von Phantombildern dahingehend zu verbessern, dass die Aussagekraft und Flexibilität von Phantombildern für die weitere Verwendung in der Fahndung verbessert wird, ohne den Vorgang des Erstellens eines Phantombildes deutlich zu verkomplizieren.

Diese Aufgabe wird durch ein Verfahren zur Erstellung von Phantombildern, ein System zur Erstellung von Phantombildern sowie durch ein Computerprogrammprodukt mit den in den unabhängigen Ansprüchen angegebenen Merkmalen gelöst. Bevorzugte Ausführungsformen sind Gegenstand der abhängigen Ansprüche.

In einem Aspekt bietet die Erfindung somit ein computer-implementiertes Verfahren zur Erstellung von Phantombildern. Dieses Verfahren umfasst ein Bereitstellen einer Bilddatenbank, welche eine Vielzahl von ersten Bilddatenelementen umfasst, wobei jedes erste Bilddatenelement einen Gesichtsausschnitt eines menschlichen Gesichts in einer ersten Ansicht (Perspektive) darstellt und wobei die Bilddatenbank zu jedem ersten Bilddatenelement ein korrespondierendes zweites Bilddatenelement derart umfasst, dass das zweite Bilddatenelement zumindest teilweise denselben Gesichtsausschnitt desselben menschlichen Gesichts in einer zweiten Ansicht (Perspektive) darstellt.

Die bereitgestellte Bilddatenbank umfasst also Paare von einander zugeordneten, korrespondierenden Bilddatenelementen mit jeweils einem ersten und einem zweiten Bilddatenelement. In dieser Hinsicht kann die Bilddatenbank als aus speziell miteinander verbundenen Teildatenbanken zusammengesetzt angesehen werden, wobei jede Teildatenbank eine spezifische Perspektive repräsentiert. So kann beispielsweise eine erste Teildatenbank ausschließlich Bilddatenelemente für eine erste Perspektive (z.B. Frontalansicht) und eine zweite Teildatenbank ausschließlich Bilddatenelemente für eine zweite Perspektive (z.B. Profilansicht) enthalten, wobei jedes Bilddatenelemente der zweiten Teildatenbank einem korrespondierenden Bilddatenelement der ersten Teildatenbank eindeutig zugeordnet ist, und umgekehrt. Insbesondere sind die korrespondierenden Bilddatenelemente durch die Bilddatenbank miteinander verknüpft.

Die Bilddatenelemente werden im Rahmen dieser Beschreibung als korrespondierende Bilddatenelemente bezeichnet, wenn sie im Wesentlichen bzw. zumindest teilweise denselben Gesichtsausschnitt desselben menschlichen Gesichts in verschiedenen Perspektiven darstellen. Insbesondere stellen die Bilddatenelemente zu diesem Zweck fotografische Abbildungen von Ausschnitten realer Gesichter dar. Besonders bevorzugt werden sie von insbesondere nachbearbeiteten Ausschnitten von Lichtbildern realer Personen gebildet, wie weiter unten noch genauer beschrieben wird. Aufgrund der verschiedenen Perspektiven kann es vorkommen, dass in einem der korrespondierenden Bilddatenelemente eine Gesichtspartie teilweise verdeckt ist, die in einem anderen der korrespondierenden Bilddatenelemente dargestellt ist. Aus diesem Grund wird in diesem Zusammenhang hier von "im Wesentlichen" oder "zumindest teilweise" demselben Gesichtsausschnitt gesprochen. Beispielsweise kann bei einer Profildarstellung einer menschlichen Nasenpartie der abgewandte Nasenflügel verdeckt sein, während er in einer korrespondierenden Frontalansicht sichtbar ist. Dennoch betreffen die beiden Ansichten "zumindest teilweise" bzw. "im Wesentlichen" denselben Gesichtsausschnitt, nämlich in diesem Fall die Nasenpartie. Dementsprechend werden die Bilddatenelemente als korrespondierende Bilddatenelemente bezeichnet.

Das Verfahren umfasst außerdem ein Erfassen einer Benutzereingabe zur Auswahl eines ersten Bilddatenelements eines ersten Gesichtsausschnitts eines menschlichen Gesichts - also ein Bilddatenelement, welches einen ersten Gesichtsausschnitt (z.B. Frisur und/oder Augen und/oder Ohren, ...) eines menschlichen Gesichts in der ersten Perspektive darstellt - und ein Erfassen einer Benutzereingabe zur Auswahl eines ersten Bilddatenelements eines zweiten Gesichtsausschnitts eines menschlichen Gesichts - also ein Bilddatenelement, welches einen zweiten Gesichtsausschnitt (z.B. Nase und/oder Mund, ...) eines menschlichen Gesichts in der ersten Perspektive darstellt. Dabei kann das erste Bilddatenelement des zweiten Gesichtsausschnitts weitgehend unabhängig vom ersten Bilddatenelement des ersten Gesichtsausschnitts gewählt werden. Es ist dabei lediglich erwünscht, dass sich der zweite Gesichtsausschnitt vom ersten Gesichtsausschnitt unterscheidet, um gewisse Gesichtspartien nicht zweifach (z.B. zwei Nasen) in das zu erstellende Phantombild einzubinden.

Die durch die erfasste Benutzereingabe ausgewählten ersten Bilddatenelemente werden in einem ersten Anzeigebereich einer grafischen Benutzerschnittstelle grafisch dargestellt. Vorzugsweise handelt es sich dabei um ein Computerdisplay oder einen Ausschnitt (Fenster) in einem Computerdisplay. Damit kann der Benutzer die Entstehung des Phantombildes aus einzelnen Bilddatenelementen in gewohnter Weise steuern und verfolgen.

Außerdem umfasst das Verfahren ein Ermitteln der zu den ausgewählten ersten Bilddatenelementen korrespondierenden zweiten Bilddatenelemente aus der bereitgestellten Bilddatenbank. Aufgrund der erfindungsgemäßen Struktur der bereitgestellten Bilddatenbank ist dies für jede Auswahl und jede Kombination erster Bilddatenelemente möglich. Besonders bevorzugt wird das jeweils korrespondierende zweite Bilddatenelement automatisch ermittelt.

Schließlich umfasst das Verfahren außerdem ein grafisches Darstellen der ermittelten zweiten Bilddatenelemente in einem zweiten Anzeigebereich der grafischen Benutzerschnittstelle. Vorzugsweise handelt es sich dabei um ein Computerdisplay oder einen Ausschnitt (Fenster) in einem Computerdisplay. Durch das Ermitteln der korrespondierenden Bilddatenelemente zu den vom Benutzer ausgewählten Bilddatenelementen entsteht auf sehr einfache Weise zusammen mit dem vom Benutzer (insbesondere unter Mitwirkung eines Augenzeugen) erstellten Phantombildes in der ersten Perspektive ein weiters Phantombild des möglichen Täters in einer zweiten Perspektive. Das zweite Phantombild ist dabei in Bezug auf die Anatomie der einzelnen Gesichtsausschnitte automatisch konsistent zu dem Phantombild in der ersten Perspektive.

Im Rahmen der Entstehung der Erfindung stellte sich insbesondere heraus, dass es für Zeugen in der Praxis schwierig ist, der Erstellung von Phantombildern in einer simulierten drei-dimensionalen Darstellung folgen zu können. Auch wenn im Endeffekt eine dreidimensionale Darstellung eines Täters für die weitere Fahndung sehr wünschenswert erscheint, gestaltet sich die Erstellung eines Phantombilds auf Basis einer von Beginn an dreidimensionalen Darstellung unter Mitwirkung eines Zeugen schwierig. Dies liegt nicht zuletzt an den hohen Anforderungen, die an ein Rechnersystem zu stellen sind, und die erforderlichen Erfahrungen des Benutzers bei der Bedienung einer dreidimensional simulierten Darstellung. Ein wesentliches Problem ist auch die für den Zeugen sehr komplex wirkende Darstellung in drei Dimensionen, die die Erstellung aussagekräftiger Phantombilder erschwert.

Durch die vorliegende Erfindung ist es hingegen sehr einfach, ein Phantombild auf Basis einer zweidimensionalen Darstellung in scheinbar gewohnter Weise zu erstellen, während die erfindungsgemäße Struktur der Datenbank, in der jedem für die Erstellung des Phantombildes ausgewählten Bilddatenelement ein korrespondierendes Bilddatenelement zugeordnet ist, durch die unterschiedlichen Perspektiven Zusatzinformationen über eine weitere räumliche Dimension bereitstellt, welche in anatomisch konsistenter Weise zu den entsprechenden Gesichtsausschnitten in der ersten Perspektive passen.

So stellte sich überraschenderweise heraus, dass die Aussagekraft von Phantombildern, die gemäß der vorliegenden Erfindung erstellt wurden, also die Chance, darin einen Täter wiederzuerkennen, in vielen Fällen größer ist als bei Phantombildern, die anhand vollständig dreidimensionaler Darstellungen erstellt wurden. Eine mögliche Erklärung für diese Effizienz der vorliegenden Erfindung liegt darin, dass die Erstellung vergleichbar detaillierter Phantombilder mittels einer vollständig dreidimensionalen Darstellung in der Praxis überraschenderweise sehr viel mehr Zeit in Anspruch nimmt als die Erstellung eines entsprechenden Phantombildes gemäß der vorliegenden Erfindung. Sowohl die unerwartet höheren Anforderungen an die Konzentrationsfähigkeit des Zeugen bei einer vollständig dreidimensionalen Darstellung ebenso wie der zum Teil sogar vielfache Zeitaufwand im Vergleich zu einer Phantombilderstellung gemäß der vorliegenden Erfindung, führen im Endeffekt in sehr vielen Fällen zu einer besseren Aussagekraft erfindungsgemäß erstellter Phantombilder. Die schnellere Bearbeitung erspart außerdem Arbeitszeit und damit Kosten. In Verbindung mit der qualitativen Verbesserung bietet die Erfindung insgesamt eine wesentliche Effizienzsteigerung.

In einer bevorzugten Ausführungsform ist es dabei möglich, das Phantombild in herkömmlicher Weise auf Basis einer einzigen Ansicht/Perspektive zu erstellen. So könnte beispielsweise der Zeuge den Täter in erster Linie in der Frontalansicht gesehen haben oder sich vorwiegend oder ausschließlich an die Frontalansicht erinnern. Das Verfahren umfasst dazu vorzugsweise ein Aktivieren eines 2D-Editiermodus, bei dem während des Erfassens von Benutzereingaben zur Auswahl und/oder zur Positionierung und/oder Orientierung und/oder Dimensionierung erster Bilddatenelemente zwar der erste Anzeigebereich nicht aber der zweite Anzeigebereich grafisch dargestellt wird. Das zweite Phantombild in der zweiten Perspektive entsteht dabei gewissermaßen im Hintergrund, ohne dass der Zeuge davon abgelenkt oder verwirrt wird. Die Erstellung des Phantombildes erfolgt also zumindest zunächst ausschließlich auf Basis der ersten Ansicht, wobei vorzugsweise ausgewählt werden kann, welche von mehreren durch die Datenbank, insbesondere in Form von Teildatenbanken, zur Verfügung stehenden Perspektiven im aktivierten 2D-Editiermodus als "erste" Perspektive angezeigt und editiert wird.

Nach Fertigstellung des Phantombildes im 2D-Editiermodus auf Basis der ersten Perspektive steht insbesondere automatisch ein zweites Phantombild in der zweiten Perspektive zur Verfügung, das für die weitere Fahndung sehr hilfreich sein kann. Vorzugsweise ist es aber auch möglich, zwischen den Perspektiven umzuschalten und/oder nach der Erstellung des Phantombildes in der ersten Perspektive (oder auch zwischendurch) den zweiten Anzeigebereich einzublenden, um gegebenenfalls auf Basis dieser Ansicht noch Korrekturen am Phantombild vornehmen zu können. Dies ist besonders hilfreich, wenn der Zeuge den Täter auch (zumindest kurzzeitig) in der zweiten Perspektive gesehen hat. Das Verfahren umfasst außerdem ein Erfassen einer Benutzereingabe zur Positionierung und/oder Orientierung und/oder Dimensionierung der Darstellung des ersten Bilddatenelements des zweiten Gesichtsausschnitts im ersten Anzeigebereich relativ zur Darstellung des ersten Bilddatenelements des ersten Gesichtsausschnitts im ersten Anzeigebereich. Der Benutzer kann damit einzelne Gesichtsausschnitte relativ zueinander verschieben und/oder drehen und/oder in ihrer relativen Größe (z.B. Höhe und/oder Breite) verändern. Besonders bevorzugt erfolgt die Benutzereingabe zur Positionierung und/oder Orientierung und/oder Dimensionierung mittels der grafischen Benutzerschnittstelle, insbesondere indem der Benutzer eine Darstellung des Bilddatenelements (z.B. die Darstellung der Nase) mittels eines Cursors oder Mauszeigers oder eines sonstigen grafischen Zeigers für ein Eingabegerät oder mittels eines Touchpads oder Touchscreens auswählt und mittels des entsprechenden Eingabegeräts (z.B. Maus, Tastatur, Touchpad, Touchscreen, ...) verschiebt und/oder dreht und/oder in der Größe und/oder Form und/oder Farbe bzw. Intensität verändert.

Dabei umfasst das Verfahren außerdem ein Anpassen der Positionierung bzw. Orientierung bzw. Dimensionierung der Darstellung des korrespondierenden zweiten Bilddatenelements des zweiten Gesichtsausschnitts im zweiten Anzeigebereich relativ zur Darstellung des zweiten Bilddatenelements des ersten Gesichtsausschnitts im zweiten Anzeigebereich in Abhängigkeit von der erfassten Benutzereingabe zur Positionierung und/oder Orientierung und/oder Dimensionierung im ersten Anzeigebereich. Damit bleibt das zweite Phantombild, also das gleichzeitig entstehende Phantombild in der zweiten Perspektive nicht nur hinsichtlich der Anatomie der einzelnen Gesichtsausschnitte, sondern auch in Bezug auf deren relative Zusammenstellung vollständig konsistent zum dem im ersten Anzeigebereich erstellten bzw. angezeigten Phantombild.

Zwar ist es in einer Ausführungsform möglich, die Positionierung und/oder Orientierung und/oder Dimensionierung der Darstellung der zweiten Bilddatenelemente im zweiten Anzeigebereich manuell vorzunehmen. Dazu werden vorzugsweise der erste und zwei Anzeigebereich gleichzeitig nebeneinander dargestellt und es wird ein Raster von Hilfslinien (z.B. ein Gitter) im ersten und zweiten Anzeigebereich, insbesondere durchgehend dargestellt. Anhand dieser Hilfslinien kann eine Anpassung der Positionierung bzw. Orientierung bzw. Dimensionierung durch den Benutzer sehr leicht erfolgen. Besonders bevorzugt erfolgt eine Anpassung der Positionierung und/oder Orientierung und/oder Dimensionierung der Darstellung der zweiten Bilddatenelemente aber automatisch auf Basis der erfassten Benutzereingabe zur Positionierung und/oder Orientierung und/oder Dimensionierung der Darstellung im ersten Anzeigebereich, also ohne dass der Benutzer eine weitere Benutzereingabe eigens für die Positionierung und/oder Orientierung und/oder Dimensionierung der Darstellung im zweiten Anzeigebereich vornehmen muss.

In einem erfindungsgemäßen Aspekt stellt zumindest eine der ersten und zweiten Perspektive eine Teilprofilansicht dar. Dabei umfasst das Verfahren ein Ermitteln eines ersten und eines zweiten Bearbeitungsbereichs des ersten bzw. zweiten Anzeigebereichs, also eines ersten und eines zweiten Bearbeitungsbereichs in zumindest demjenigen Anzeigebereich, der die zumindest eine Teilprofilansicht darstellt, derart, dass der erste Bearbeitungsbereich eine einer Betrachtungsrichtung in der dargestellten Perspektive teilweise abgewandte Gesichtshälfte darstellt, während der zweite Bearbeitungsbereich eine der Betrachtungsrichtung zugewandte Gesichtshälfte darstellt. Das dargestellte Gesicht wird also entlang einer Mittellinie (Profillinie) des Gesichts in zwei Bearbeitungsbereiche aufgeteilt, welche aufgrund der perspektivisch schrägen Darstellung im Anzeigebereich der Benutzerschnittstelle unterschiedlich groß sind.

Das Verfahren umfasst in diesem erfindungsgemäßen Aspekt außerdem ein Ermitteln eines (ersten) Skalierungsfaktors, welcher in Abgrenzung zu weiteren noch beschriebenen Skalierungsfaktoren bevorzugter Ausführungsformen auch als Teilprofil-Teilprofil-Skalierungsfaktor bezeichnet werden könnte, da er die beiden Gesichtshälften in der Teilprofilansicht miteinander verknüpft. Das Ermitteln des Teilprofil-Teilprofil-Skalierungsfaktors kann dabei auf unterschiedliche Weise erfolgen. In einer bevorzugten Ausführungsform ist dieser Skalierungsfaktor in der Datenbank hinterlegt und wird für die Bearbeitung der Teilprofilansicht des Phantombildes aus der Datenbank abgerufen. Nachdem die Bilddatenelemente der zumindest einen Teilprofilansicht vorzugsweise zur gleichen Perspektive, also zum gleichen Betrachtungs- und Aufnahmewinkel relativ zur Frontalansicht gehören, wird in einer bevorzugten Ausführungsform für diese zumindest eine Teilprofilansicht immer der gleiche, in der Datenbank dafür hinterlegte Skalierungsfaktor verwendet. In einer bevorzugten Ausführungsform liegt der Aufnahmewinkel relativ zur Frontalansicht im Bereich von etwa 35° bis etwa 45°. Der Teilprofil-Teilprofil-Skalierungsfaktor liegt dabei vorzugsweise in einem Bereich von etwa 1,5 bis etwa 3, noch mehr bevorzugt in einem Bereich von etwa 1,8 bis etwa 2,3, am meisten bevorzugt bei einem Wert von etwa 2. Dies ist besonders bevorzugt, wenn der Aufnahmewinkel relativ zur Frontalansicht bei einem Wert von etwa 45° liegt.

Außerdem umfasst das Verfahren in diesem erfindungsgemäßen Aspekt ein Erfassen einer Benutzereingabe zur grafischen Bearbeitung der Darstellung im ersten oder zweiten Bearbeitungsbereich, welche ein Verschieben zumindest eines Pixels der Darstellung im ersten bzw. zweiten Bearbeitungsbereich und/oder eines im ersten bzw. zweiten Bearbeitungsbereich dargestellten primären Bearbeitungswerkzeugs um eine durch die Benutzereingabe festgelegte primäre Positionsänderung umfasst, welche eine primäre horizontale und/oder eine primäre vertikalen Komponente der Positionsänderung aufweist. Der Benutzer kann damit individuell Bereiche des Bildes in einem Bearbeitungsbereich ändern. Beispielsweise kann er damit die Position eines Auges bzw. den Abstand des Auges zur Mittellinie des Gesichts und/oder die Breite eines Nasenflügels und/oder Breite und/oder Form des Mundes in einem der beiden Bearbeitungsbereiche direkt individuell anpassen. Dazu benutzt er ein entsprechendes virtuelles Bearbeitungswerkzeug, welches er beispielsweise über eine Computermaus oder ein Touchpad als Eingabegerät bedient. Die aktuelle Position des Bearbeitungswerkzeugs im direkt bearbeiteten Bildbereich wird beispielsweise durch einen entsprechenden Cursor im Anzeigebereich dargestellt. Durch einen Mausklick kann der Benutzer einzelne Pixel oder eine Vielzahl von Pixeln in einer Umgebung der aktuellen Cursorposition ergreifen und innerhalb des Bearbeitungsbereichs verschieben. Die Verschiebung kann dabei horizontale und/oder vertikale Komponenten enthalten. Diese vom Benutzer direkt gesteuerte Verschiebung wird hier als primäre Positionsänderung bezeichnet.

Vorzugsweise wird dabei simultan ein entsprechender Bildbereich des anderen Bearbeitungsbereichs mit verändert, um den Eindruck der Symmetrie des Gesicht unbeeinträchtigt zu lassen, ohne dass der Benutzer diese Anpassung separat manuell vornehmen muss. So umfasst das Verfahren ein insbesondere simultanes Verschieben zumindest eines Pixels der Darstellung im zweiten bzw. ersten Bearbeitungsbereich bzw. eines im zweiten bzw. ersten Bearbeitungsbereich dargestellten sekundären Bearbeitungswerkzeugs um eine in Abhängigkeit von der Benutzereingabe und dem (ersten) Skalierungsfaktor (Teilprofil-Teilprofil-Skalierungsfaktor) ermittelten sekundären Positionsänderung, welche eine sekundäre horizontale und/oder eine sekundäre vertikale Komponente derart aufweist, dass die sekundäre horizontale Komponente der um den ersten Skalierungsfaktor skalierten primären horizontalen Komponente entspricht und die sekundäre vertikale Komponente der primären vertikalen Komponente entspricht.

Dabei weist das virtuelle Bearbeitungswerkzeug neben einem primären Bearbeitungswerkzeug, welches direkt auf den vom Benutzer mittels des primären Bearbeitungswerkzeugs bearbeiteten Bearbeitungsbereich wirkt, ein auf den anderen (komplementären) Bearbeitungsbereich (also die andere Gesichtshälfte) wirkendes sekundäres Bearbeitungswerkzeug auf. Dessen aktuelle Position innerhalb des entsprechenden Bearbeitungsbereichs kann dabei ebenfalls über einen grafischen Cursor angezeigt werden. Die Position des sekundären Bearbeitungswerkzeugs ebenso wie die Position der damit bearbeiteten grafischen Elemente (z.B. Pixel) wird dabei vorzugsweise simultan zum primären Bearbeitungswerkzeug aber skaliert zu dessen Bewegung geändert. Dabei ist die vertikale Bewegung beider Bearbeitungswerkzeuge die gleiche. Die horizontale Komponente ist allerdings um den Teilprofil-Teilprofil-Skalierungsfaktor skaliert und in entgegengesetzter Richtung, so dass beide horizontalen Komponenten entweder auf die Mittellinie des Gesichts hin oder davon weg zeigen. Wird beispielsweise der erste Bearbeitungsbereich vom Benutzer direkt bearbeitet, dann wird die sekundäre horizontale Komponente durch eine Multiplikation mit dem Skalierungsfaktor aus der primären horizontalen Komponente gewonnen. Wird andererseits der zweite Bearbeitungsbereich vom Benutzer direkt bearbeitet, dann wird die sekundäre horizontale Komponente durch eine Division mit dem Skalierungsfaktor aus der primären horizontalen Komponente gewonnen. Damit ergibt sich in horizontaler Richtung stets eine entsprechend größere Veränderung auf der Darstellung der dem Betrachter zugewandten Gesichtsseite als auf der Darstellung der vom Betrachter abgewandten Gesichtsseite. Auch wenn die Umrechnung mittels eines Skalierungsfaktors eine anatomische Näherung darstellt, zeigte sich dass damit auf sehr einfache Weise eine unerwartet gute Akzeptanz bei Augenzeugen im Rahmen der Erstellung von Phantombildern erreicht wird.

In einer bevorzugten Ausführungsform umfasst das Ermitteln eines ersten und zweiten Bearbeitungsbereichs ein Ermitteln einer Profillinie (Mittellinie) des Gesichts. Die Profillinie kann dabei anhand einer automatisierten grafischen Auswertung von Kontrasten im Anzeigebereich der Teilprofilansicht automatisch ermittelt werden. In einer bevorzugten Ausführungsform umfasst der Ermitteln der Profillinie in der Teilprofilansicht ein Ermitteln einer Profillinie in einer korrespondierenden Profilansicht und ein Skalieren der ermittelten Profillinie. So kann die Profillinie in der Profilansicht sehr viel einfacher und exakter automatisch ermittelt werden. Dabei lässt sich die Form der Profillinie in der Teilprofilansicht sehr gut aus der Form der Profillinie in der Profilansicht unter Berücksichtigung des Betrachtungswinkels in der Teilprofilansicht ableiten. Beispielsweise erfolgt dabei eine Skalierung der horizontalen Form der Profillinie um den Faktor sin(α), wenn α der Betrachtungswinkel in der Teilprofilansicht relativ zur Frontalansicht ist. Außerdem können auch Umrisslinien in der Teilprofilansicht automatisch ermittelt werden. Damit sind die Bearbeitungsbereiche in der Teilprofilansicht vorzugsweise bereits festgelegt.

Die beschriebene Art der vorzugsweise simultanen Bearbeitung beider Bearbeitungsbereiche ist dabei nicht auf einen fest hinterlegten Skalierungsfaktor beschränkt. In einer anderen bevorzugten Ausführungsform wird der Skalierungsfaktor zumindest teilweise unter Berücksichtigung der im Teilprofil dargestellten Bilddatenelemente ermittelt. So umfasst das Ermitteln des Skalierungsfaktors in einer bevorzugten Ausführungsform ein Ermitteln eines Verhältnisses des Abstandes eines ausgezeichneten Punktes im zweiten Bearbeitungsbereich von der Mittellinie (Profillinie) zum Abstand eines korrespondierenden ausgezeichneten Punktes im ersten Bearbeitungsbereich. Als solche ausgezeichneten Punkte können beispielsweise der dem Betrachter zugewandte und (als korrespondierender ausgezeichneter Punkt) der vom Betrachter abgewandte Mundwinkel in der grafischen Darstellung der Teilprofilansicht sein. Alternativ oder zusätzlich können auch die Pupillen als ausgezeichnete Punkte herangezogen werden. Die Verwendung solcher ausgezeichneter Punkte ist daher vorteilhaft, weil deren Erkennung und Auswertung auch automatisch sehr zuverlässig erfolgen kann. Der verwendete Skalierungsfaktor kann dabei allein auf einem ermittelten Abstandsverhältnis oder auf einem Mittelwert unterschiedlicher Abstandsverhältnisse verschiedener ausgezeichneter Punkte beruhen. Es ist aber auch möglich, einen in der Datenbank hinterlegten Wert in Abhängigkeit von einem oder mehreren ermittelten Abstandsverhältnissen zu korrigieren und diesen korrigierten Wert als Skalierungsfaktor heranzuziehen.

In vielen Fällen umfasst die Wahrnehmung eines Augenzeugen nicht nur eine, sondern wesentlich mehr Perspektiven. Um sich diesen Umstand bei der Erstellung eines Phantombildes zunutze zu machen, umfasst das Verfahren vorzugsweise ein Aktivieren eines 3D-Editiermodus, bei dem während des Erfassens von Benutzereingaben zur Auswahl und/oder zur Positionierung und/oder Orientierung und/oder Dimensionierung erster Bilddatenelemente der erste Anzeigebereich und der zweite Anzeigebereich gleichzeitig grafisch dargestellt werden. Der Benutzer/Zeuge kann damit gewissermaßen parallel eine Kontrolle und/oder Korrektur einer Auswahl und/oder Positionierung und/oder Orientierung und/oder Dimensionierung der Darstellungen von Bilddatenelementen in zwei Perspektiven gleichzeitig vornehmen. Dazu umfasst das Verfahren vorzugsweise ein Erfassen einer Benutzereingabe zur Positionierung und/oder Orientierung und/oder Dimensionierung der Darstellung des zweiten Bilddatenelements des zweiten Gesichtsausschnitts im zweiten Anzeigebereich relativ zur Darstellung des zweiten Bilddatenelements des ersten Gesichtsausschnitts im zweiten Anzeigebereich; und ein Anpassen der Positionierung bzw. Orientierung bzw. Dimensionierung der Darstellung des korrespondierenden ersten Bilddatenelements des zweiten Gesichtsausschnitts im ersten Anzeigebereich relativ zur Darstellung des ersten Bilddatenelements des ersten Gesichtsausschnitts im ersten Anzeigebereich in Abhängigkeit von der erfassten Benutzereingabe zur Positionierung und/oder Orientierung und/oder Dimensionierung im zweiten Anzeigebereich.

In einem weiteren erfindungsgemäßen Aspekt stellt zumindest eine der ersten und zweiten Perspektive eine Teilprofilansicht und eine andere der ersten und zweiten Perspektive eine Frontalansicht dar. Dabei umfasst das Verfahren ein Ermitteln eines ersten Bearbeitungsbereichs der Teilprofilansicht (also eines ersten Bearbeitungsbereichs desjenigen Anzeigebereichs, der die Teilprofilansicht darstellt), welcher eine erste Gesichtshälfte in der Teilprofilansicht darstellt, und eines dazu korrespondierenden ersten Bearbeitungsbereichs der Frontalansicht, welcher die erste Gesichtshälfte in der Frontalansicht darstellt. Diese erste Gesichtshälfte kann dabei die in der Teilprofilansicht dem Betrachter zugewandte oder die vom Betrachter abgewandte Gesichtshälfte sein. Das dargestellte Gesicht wird also in beiden Perspektiven entlang einer Mittellinie (Profillinie) des Gesichts insbesondere in jeweils zwei Bearbeitungsbereiche aufgeteilt. Aufgrund der unterschiedlichen Perspektive sind die ersten Bearbeitungsbereiche in den beiden Anzeigebereichen unterschiedlich groß.

Das Verfahren umfasst in diesem erfindungsgemäßen Aspekt außerdem ein Ermitteln eines ersten Skalierungsfaktors, welcher in Abgrenzung zu weiteren (auch bereits weiter oben) beschriebenen Skalierungsfaktoren bevorzugter Ausführungsformen auch als erster Teilprofil-Frontal-Skalierungsfaktor bezeichnet werden könnte, da er die ersten Bearbeitungsbereiche der Teilprofilansicht und der Frontalansicht miteinander verknüpft. Das Ermitteln des ersten Teilprofil-Frontal-Skalierungsfaktors kann dabei auf unterschiedliche Weise erfolgen. In einer bevorzugten Ausführungsform ist dieser Skalierungsfaktor in der Datenbank hinterlegt und wird für die vorzugsweise simultane Bearbeitung der Teilprofil- und Frontalansicht des Phantombildes aus der Datenbank abgerufen. Alternativ wird der erste Teilprofil-Frontal-Skalierungsfaktor wie oben im Zusammenhang mit dem Teilprofil-Teilprofil-Skalierungsfaktor beschrieben zumindest teilweise aus einem Verhältnis der Abstände ausgezeichneter Punkte von der Mittellinie jeweils im ersten Bearbeitungsbereich der Frontalansicht und der Teilprofilansicht ermittelt.

Außerdem umfasst das Verfahren in diesem erfindungsgemäßen Aspekt ein Erfassen einer Benutzereingabe zur grafischen Bearbeitung der Darstellung im ersten Bearbeitungsbereich der Teilprofilansicht oder der Frontalansicht (also im ersten Bearbeitungsbereich des ersten oder zweiten Anzeigebereichs), welche ein Verschieben zumindest eines Pixels der Darstellung im ersten Bearbeitungsbereich der entsprechenden Ansicht und/oder eines im ersten Bearbeitungsbereich der entsprechenden Ansicht dargestellten primären Bearbeitungswerkzeugs um eine durch die Benutzereingabe festgelegte primäre Positionsänderung umfasst, welche eine primäre horizontale und/oder eine primäre vertikalen Komponente der Positionsänderung aufweist. Der Benutzer kann damit individuell Bereiche des Bildes im ersten Bearbeitungsbereich einer der dargestellten Ansichten ändern. Beispielsweise kann er damit die Position eines Auges bzw. den Abstand des Auges zur Mittellinie des Gesichts und/oder die Breite eines Nasenflügels und/oder Breite und/oder Form des Mundes in einem der beiden Bearbeitungsbereiche direkt individuell anpassen. Diese Bearbeitung kann entsprechend der bereits beschriebenen Bearbeitung einer Teilprofilansicht erfolgen.

Vorzugsweise wird dabei simultan ein entsprechender Bildbereich in der anderen Perspektive mit verändert, um den Eindruck einer perspektivischen Konsistenz zwischen den beiden Perspektiven unbeeinträchtigt zu lassen, ohne dass der Benutzer diese Anpassung separat manuell vornehmen muss. So umfasst das Verfahren in diesem erfindungsgemäßen Aspekt ein vorzugsweise simultanes Verschieben zumindest eines Pixels der Darstellung im ersten Bearbeitungsbereich der entsprechend anderen Perspektive (also der Frontalansicht bzw. der Teilprofilansicht) bzw. eines im ersten Bearbeitungsbereich dieser anderen Perspektive dargestellten sekundären Bearbeitungswerkzeugs um eine in Abhängigkeit von der Benutzereingabe und dem ersten Teilprofil-Frontal-Skalierungsfaktor ermittelten sekundären Positionsänderung, welche eine sekundäre horizontale und/oder eine sekundäre vertikale Komponente derart aufweist, dass die sekundäre horizontale Komponente der um den ersten Skalierungsfaktor skalierten primären horizontalen Komponente entspricht und die sekundäre vertikale Komponente der primären vertikalen Komponente entspricht. Die Anpassung mittels des sekundären Bearbeitungswerkzeugs muss nicht notwendigerweise simultan erfolgen oder simultan angezeigt werden. Vielmehr kann beispielsweise in einem 2D-Editiermodus zunächst auch nur eine Perspektive bearbeitet und/oder angezeigt werden, wobei die automatische Übertragung der Veränderungen auf die andere Perspektive erst mit einer Aktivierung des kombinierten Bearbeitungswerkzeugs oder eines 3D-Editiermodus erfolgt und/oder angezeigt wird.

Wie bereits bei der Bearbeitung der Teilprofilansicht beschrieben weist das virtuelle Bearbeitungswerkzeug neben einem primären Bearbeitungswerkzeug, welches direkt auf den vom Benutzer mittels des primären Bearbeitungswerkzeugs bearbeiteten Bearbeitungsbereich wirkt, ein auf den anderen (komplementären) Bearbeitungsbereich (also die andere Perspektive) wirkendes sekundäres Bearbeitungswerkzeug auf. Die Position des sekundären Bearbeitungswerkzeugs ebenso wie die Position der damit bearbeiteten grafischen Elemente (z.B. Pixel) wird dabei simultan zum primären Bearbeitungswerkzeug aber skaliert zu dessen Bewegung geändert. Dabei ist die vertikale Bewegung beider Bearbeitungswerkzeuge die gleiche. Die horizontale Komponente ist allerdings um den Teilprofil-Frontal-Skalierungsfaktor skaliert. Wird beispielsweise als erster Bearbeitungsbereich der Teilprofilansicht die vom Betrachter abgewandte Gesichtshälfte vom Benutzer direkt bearbeitet, dann wird die sekundäre horizontale Komponente z.B. durch eine Multiplikation mit dem Skalierungsfaktor aus der primären horizontalen Komponente gewonnen, wobei sich eine entsprechende Vergrößerung der horizontalen Ausdehnung des Bearbeitungseffekts in der Frontalansicht ergibt. Entsprechendes gilt bei einer primären Bearbeitung anderer Gesichtshälften und einer dabei ermittelten vergrößerten oder verkleinerten Übertragung auf die andere Perspektive. Auch in diesem Fall stellt die Umrechnung mittels eines Skalierungsfaktors eine anatomische Näherung dar. Es zeigte sich aber, dass damit auf sehr einfache Weise eine unerwartet gute Akzeptanz bei Augenzeugen im Rahmen der Erstellung von Phantombildern erreicht wird.

In einer weiteren bevorzugten Ausführungsform ist die für die ersten Bearbeitungsbereiche der Teilprofilansicht und der Frontalansicht in analoger Weise alternativ oder zusätzlich auch auf die andere Gesichtshälfte, also auf zweite Bearbeitungsbereiche der Teilprofilansicht und der Frontalansicht anwendbar, wobei hier ein zweiter Teilprofil-Frontal-Skalierungsfaktor Anwendung findet. Vorzugsweise ergibt das Produkt aus dem ersten und dem zweiten Teilprofil-Frontal-Skalierungsfaktor den weiter oben beschriebenen Teilprofil-Teilprofil-Skalierungsfaktor.

Vorzugsweise wird die Bilddatenbank derart bereitgestellt, dass sie eine Vielzahl von Bildbereichsdatensätzen umfasst, von denen jeder eine Vielzahl von Bilddatenelementen derart umfasst, dass die in verschiedenen Bildbereichsdatensätzen enthalten Bilddatenelemente verschiedene Gesichtsausschnitte menschlicher Gesichter darstellen, während verschiedene Bilddatenelemente innerhalb eines Bildbereichsdatensatzes im Wesentlichen denselben Gesichtsausschnitt von unterschiedlichen menschlichen Gesichtern darstellen.

In einem beispielhaften Aspekt wird die Datenbank derart bereitgestellt, dass sie zu jedem ersten Bilddatenelement ein korrespondierendes drittes Bilddatenelement derart umfasst, dass das dritte Bilddatenelement zumindest teilweise denselben Gesichtsausschnitt desselben menschlichen Gesichts in einer dritten Ansicht/Perspektive darstellt, wobei das Verfahren ein Ermitteln der zu den ausgewählten ersten Bilddatenelementen korrespondierenden dritten Bilddatenelemente umfasst. In einer besonders bevorzugten Ausführungsform umfasst das Verfahren in diesem Fall ein grafisches Darstellen der ermittelten dritten Bilddatenelemente in einem dritten Anzeigebereich der grafischen Benutzerschnittstelle. Besonders bevorzugt werden die Anpassungen der Positionierung und/oder Orientierung und/oder Dimensionierung der Darstellung der dritten Bilddatenelemente im dritten Anzeigebereich analog zum ersten bzw. zweiten Anzeigebereich in Abhängigkeit von entsprechenden Benutzereingaben durchgeführt. Der dritte Anzeigebereich kann dabei entweder alternativ oder zusätzlich zum ersten und/oder zweiten Anzeigebereich dargestellt werden. In einer weiteren bevorzugten Ausführungsform wird der dritte Anzeigebereich nicht unmittelbar dargestellt. Vielmehr dienen die dritten Bilddatenelemente nach der Fertigstellung des Phantombildes auf Basis der ersten und/oder zweiten Anzeigebereiche in erster Linie einer Erstellung eines dreidimensionalen Modells des Täterbildes.

Vorzugsweise wird die Bilddatenbank derart bereitgestellt, dass die erste und/oder zweite und/oder dritte Ansicht/Perspektive eine Frontalansicht und/oder eine Profilansicht und/oder eine Halbprofilansicht des jeweiligen menschlichen Gesichts umfassen. Beispielsweise könnte die erste Perspektive eine Frontalansicht, die zweite Perspektive ein Profilansicht und die dritte Perspektive eine Halbprofilansicht darstellen. Es wäre aber auch jede andere bzw. vertausche Zuordnung möglich, insbesondere eine Vertauschung der Rolle der ersten und zweiten Perspektive.

Vorzugsweise umfasst das Verfahren außerdem ein Erstellen eines 3D-Modells (dreidimensionales Modell) eines menschlichen Gesichts aus den ausgewählten ersten Bilddatenelementen und den ermittelten dazu korrespondierenden zweiten und/oder dritten Bilddatenelementen. Durch die anatomischen Übereinstimmungen der Bilddatenelemente in den verschiedenen Perspektiven ist ein nachträgliches Erstellen bzw. Simulieren bzw. Berechnen (auch "rendering" genannt) eines dreidimensionalen Modells sehr gut möglich. Besonders bevorzugt wird das auf diese Weise dreidimensional modellierte menschliche Gesicht in einer weiteren, von der ersten und zweiten Perspektive abweichenden Perspektive grafisch dargestellt. Insbesondere ist es damit möglich das Täterbild in verschiedenen Perspektiven darzustellen. Man erreicht damit die gesamten Vorteile eines vollständig dreidimensionalen Phantombildes, ohne bei der Erstellung des Phantombildes mit den Problemen einer dreidimensionalen Darstellung konfrontiert zu sein.

Vorzugsweise umfasst das Bereitstellen der Bilddatenbank ein Verfahren zur Erstellung einer Bilddatenbank gemäß einem weiteren Aspekt der Erfindung. In diesem Aspekt bietet die Erfindung ein computer-implementiertes Verfahren zur Erstellung oder Erweiterung einer Bilddatenbank für Phantombilder. Das Verfahren umfasst dabei ein Erstellen einer ersten fotografischen Abbildung eines menschlichen Gesichts in einer ersten Ansicht/Perspektive und ein Erstellen einer zweiten fotografischen Abbildung des menschlichen Gesichts in einer zweiten Ansicht/Perspektive.

Außerdem umfasst das Verfahren ein Erzeugen einer Vielzahl erster Bilddatenelemente aus der ersten fotografischen Abbildung und einer Vielzahl zweiter Bilddatenelemente aus der zweiten fotografischen Abbildung, wobei die erzeugten Bilddatenelemente jeweils einen Gesichtsausschnitt des menschlichen Gesichts derart darstellen, dass zu jedem ersten Bilddatenetement ein korrespondierendes zweites Bilddatenelement existiert, das zumindest teilweise denselben Gesichtsausschnitt des menschlichen Gesichts darstellt.

Das Verfahren umfasst somit insbesondere ein Unterteilen der ersten und zweiten fotografischen Abbildung nach einem vorgegebenen Schema in eine Vielzahl von Bildbereiche derart, dass zu jedem ersten Bildbereich der ersten fotografischen Abbildung ein korrespondierender zweiter Bildbereich der zweiten fotografischen Abbildung existiert, der zumindest teilweise denselben Gesichtsausschnitt des menschlichen Gesichts darstellt wie der erste Bildbereich. Dabei wird vorzugsweise kein Ausschnitt des menschlichen Gesichts auf zwei ersten bzw. zwei zweiten Bilddatenelementen dargestellt, d.h. die von den Bilddatenelementen dargestellten Ausschnitte des menschlichen Gesichts überschneiden sich vorzugsweise nicht. Besonders bevorzugt umfassen die Gesichtsausschnitte jeweils eine Augenpartie und/oder eine Ohrenpartie und/oder eine Nasenpartie und/oder eine Mundpartie und/oder das Haupthaar.

Besonders bevorzugt umfasst das Erzeugen der Vielzahl von Bilddatenelementen aus der entsprechenden Abbildung ein Ausschneiden einer Vielzahl von Gesichtsausschnitten und ein grafisches Nachbearbeiten der Ausschnitte insbesondere, wobei das Nachbearbeiten insbesondere ein Glätten von Rändern umfasst. Darunter ist beispielsweise zu verstehen, dass insbesondere die Farbintensität und/oder der Kontrast in der Darstellung der entsprechende Gesichtspartie zum Rand des Ausschnittes hin - beispielsweise in den äußersten 0,5 bis 5 Millimeter des jeweiligen Bildausschnitts in der Originalgröße des menschlichen Gesichts - abnimmt, oder dass in diesem Bereich eine zum Rand des Ausschnittes hin zunehmende Transparenz der bildlichen Darstellung hinzugefügt wird. Damit kann beim Einfügen des jeweiligen Bilddatenelements in ein späteres Phantombild ein kontinuierlicher Übergang hin zu einem Hintergrund und/oder zu benachbarten Bilddatenelementen geschaffen werden.

Außerdem umfasst das Verfahren ein Speichern der Vielzahl erster und zweiter Bilddatenelemente derart, dass jedem ersten Bilddatenelement das dazu korrespondierende zweite Bilddatenelement in der Datenbank eindeutig zugeordnet ist. Eine solche Zuordnung kann zum Beispiel über entsprechend Dateinamen der Bilddatenelemente oder in sonstiger Weise durch eine geeignete Anordnung oder Indizierung erreicht werden.

Insbesondere für die Erstellung der Datenbank von Beginn an - falls also vorher noch keine Bilddatenelemente gespeichert waren - werden die Verfahrensschritte für eine Vielzahl von menschlichen Gesichtern durchgeführt, wobei jeweils (also für alle Gesichter) die gleiche erste und die gleiche zweite Perspektive verwendet werden. Insbesondere stimmen für die in der Vielzahl von ersten fotografischen Abbildungen der verschiedenen menschlichen Gesichter die Aufnahmerichtungen überein. Entsprechendes gilt für die Vielzahl von zweiten fotografischen Abbildungen. Damit erhält man eine sehr umfangreichen Satz von Bilddaten in Form von sehr flexibel kombinierbaren Bilddatenelementen, wobei stets zu jedem Bilddatenelement in einer Ansicht das korrespondierende Bilddatenelement in der zweiten Ansicht zur Verfügung steht und das parallele Erstellen eines Phantombildes in der zweiten Perspektive in konsistenter Weise sehr einfach ermöglicht.

Vorzugsweise wird das Erstellen einer ersten und einer zweiten fotografischen Abbildung sowie das Erzeugen erster und zweiter Bilddatenelemente jeweils für eine Vielzahl menschlicher Gesichter auf Basis entsprechender Gesichtsausschnitte durchgeführt, wobei für jeden Gesichtsausschnitt die Bilddatenelemente der Vielzahl von Gesichtern in einem entsprechenden Bildbereichsdatensatz derart gespeichert werden, dass die Bilddatenelemente nicht in allen Bildbereichsdatensätzen in derselben Reihenfolge der Vielzahl von fotografischen Abbildungen angeordnet oder indiziert sind.

Vorzugsweise umfasst das Verfahren ein Anordnen bzw. Speicher bzw. Indizieren der ersten bzw. zweiten Bilddatenelemente innerhalb zumindest eines, vorzugsweise innerhalb jedes Bildbereichsdatensatzes in zufälliger Reihenfolge, vorzugsweise unter Zuhilfenahme eines Zufallsgenerators, wobei sich die zufällige Reihenfolge zwischen verschiedenen Bildbereichsdatensätzen unterscheidet. Vorzugsweise wird die Zuordnung der einzelnen Bilddatenelemente zu den ursprünglichen fotografischen Abbildungen auch nicht gespeichert. Damit ist es nicht mehr unmittelbar und eindeutig möglich, die ursprünglichen fotografischen Abbildungen zu rekonstruieren. Die fotografischen Abbildungen selbst werden vorzugsweise gelöscht bzw. vernichtet. Es ist damit möglich, trotz der Wahrung strenger Datenschutzkriterien reales Quellenmaterial auf Basis lebender Personen für die bildliche Darstellung zu verwenden, wobei allein aus der Datenbankstruktur kein Rückschluss auf das tatsächliche Aussehen der lebenden Personen möglich ist, die ursprünglich für das bildliche Quellenmaterial zur Verfügung standen.

Die Zuordnung zwischen korrespondierenden Bilddatenelementen wird dabei aber stets beibehalten, so dass die anatomisch konsistente Darstellung der Gesichtsausschnitte in den beiden unterschiedlichen Perspektiven für jede beliebige Zusammenstellung verschiedener Bilddatenelemente aus verschiedenen menschlichen Gesichtern des Quellenmaterials stets automatisch erhalten bleibt.

Vorzugsweise wird das Erstellen einer ersten und einer zweiten fotografischen Abbildung sowie das Erzeugen erster und zweiter Bilddatenelemente jeweils für eine Vielzahl menschlicher Gesichter auf Basis entsprechender Gesichtsausschnitte durchgeführt, wobei das Verfahren außerdem für jede erste Fotografische Abbildung ein zufälliges Auswählen zumindest eines Gesichtsausschnittes umfasst, für den kein erstes und zweites Bilddatenelement erzeugt oder zumindest gespeichert wird. Damit lässt sich bei der Erstellung der Bilddatenbank auf Basis lebender Personen keines der ursprünglichen fotografischen Darstellungen, welche das bildliche Quellenmaterial bilden, vollständig rekonstruieren, was zu einer besonderen Sicherheit in Bezug auf den Datenschutz beiträgt.

In einem weiteren beispielhaften Aspekt umfasst das Verfahren außerdem für jede erste fotografische Abbildung ein Erstellen einer dritten fotografischen Abbildung des menschlichen Gesichts in einer dritten Ansicht/Perspektive; ein Erzeugen einer Vielzahl dritter Bilddatenelemente aus der dritten fotografischen Abbildung derart, dass zu jedem ersten Bilddatenelement ein korrespondierendes drittes Bilddatenelement existiert, das zumindest teilweise denselben Gesichtsausschnitt des menschlichen Gesichts darstellt; und ein Speichern der Vielzahl dritter Bilddatenelemente derart, dass jedem ersten Bilddatenelement das dazu korrespondierende dritte Bilddatenelement in der Datenbank eindeutig zugeordnet ist.

Die Erfindung bietet außerdem ein Computerprogrammprodukt, insbesondere in Form eines maschinenlesbaren Mediums, als Signal und/oder als Datenstrom ausgestaltet, welches maschinenlesbaren Programmcode umfasst, der, wenn er geladen wird auf einem Computer, zur Ausführung eines Verfahrens gemäß der vorliegenden Erfindung in einer oder mehreren der beschriebenen Ausführungsformen führt bzw. geeignet ist.

Die Erfindung wird nachfolgend anhand bevorzugter Ausführungsformen mit Bezug auf die begleitende Zeichnungen beschrieben. Dabei zeigen:
- Fig. 1: eine schematische Darstellung zur Veranschaulichung eines Verfahrens zum Erstellen eines Phantombildes gemäß einer bevorzugten Ausführungsform der Erfindung;
- Fig. 2: eine schematische Darstellung zur Veranschaulichung eines Verfahrens zur Erstellung einer Bilddatenbank gemäß einer bevorzugten Ausführungsform der Erfindung; und
- Fig. 3A-D: beispielhafte Darstellungen von Anzeigebereichen zur Veranschaulichung eines Verfahrens zum Erstellen eines Phantombildes gemäß bevorzugter Ausführungsformen mit einer individuellen Bearbeitung der grafischen Darstellungen von Bilddatenelementen
- Fig. 4: eine schematische Darstellung eines beispielhaften Systems zum Implementieren der Erfindung.

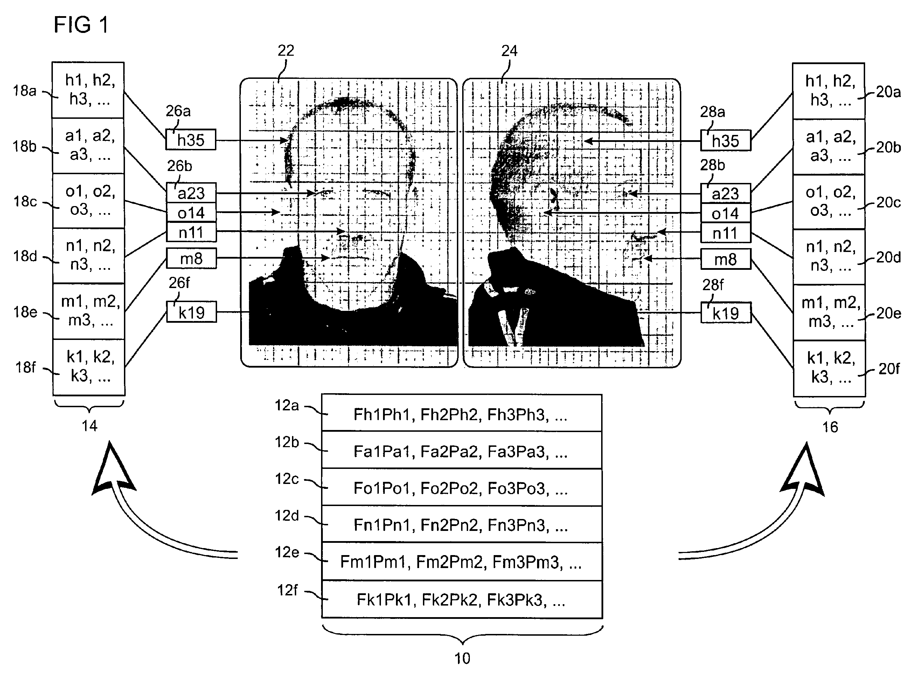

**Fig. 1** veranschaulicht schematisch einige Aspekte des Ablaufs bei einem computer-implementierten Verfahren zur Erstellung von Phantombildern gemäß einer bevorzugten Ausführungsform der Erfindung. Außerdem wird daraus eine Datenbankstruktur für die Erstellung von Phantombildern gemäß einer bevorzugten Ausführungsform zumindest teilweise schematisch erkennbar.

Zunächst wird eine Bilddatenbank 10 bereitgestellt, welche eine Vielzahl von Bildbereichsdatensätzen (12a, 12b, ... 12e) umfasst. Jeder dieser Bildbereichsdatensätze (12a, 12b, ... 12e) entspricht einem bestimmten Gesichtsausschnitt eines menschlichen Gesichts und enthält eine Vielzahl von korrespondierenden Bilddatenelementen, die den entsprechenden Gesichtsausschnitt für eine Vielzahl von menschlichen Gesichtern aus verschiedenen (im Fall von Fig. 1 jeweils zwei verschiedenen) Perspektiven darstellen. So repräsentiert ein erster Bildbereichsdatensatz 12a beispielsweise Frisuren bzw. menschliches Haupthaar, ein zweiter Bildbereichsdatensatz 12b beispielsweise Augen, ein dritter Bildbereichsdatensatz 12c beispielsweise Ohren, ein vierter Bildbereichsdatensatz 12d beispielsweise Nasen, ein fünfter Bildbereichsdatensatz 12e beispielsweise Münder. Darüber hinaus umfasst die Bilddatenbank 10 in der gezeigten Ausführungsform außerdem einen Bildbereichsdatensatz 12f, dessen Bilddatenelemente beispielsweise Kleidung darstellen.

Je nach gewünschter Detailvielfalt und Flexibilität bei der Erstellung von Phantombildern könnte die Bilddatenbank auch nur einige der genannten Bildbereichsdatensätze und/oder Kombinationen der genannten Bildbereichsdatensätze und/oder andere bzw. weitere Bildbereichsdatensätze (z.B. für Augenbrauen, Kinnpartien, Bärte, usw.) umfassen.

Die gemäß Fig. 1 bereitgestellte Bilddatenbank 10 ist für zwei verschiedene Perspektiven, nämlich eine Frotalansicht (oder Frontansicht) und eine Profilansicht (oder Lateralansicht) vorgesehen. Dementsprechend enthält die Bilddatenbank 10 korrespondierende Paare von Bilddatenelementen für jeweils eine Frontal- und eine Profilansicht. In der in Fig. 1 gezeigten Listendarstellung von Elementen in der Bilddatenbank 10 sind die korrespondierenden Paare in den einzelnen Bildbereichsdatensätzen (12a, ... 12f) in ihrer Bezeichnung durchnumeriert (1, 2, 3, ...), je nach ihrer Zugehörigkeit zu den einzelnen Bildbereichsdatensätzen mit einem bestimmten Buchstaben bezeichnet ("h" für Haare, "a" für Augen, usw.) und je nach Perspektive mit "F" für Frotalansicht und "P" für Profilansicht gekennzeichnet. Diese Bezeichnungsweise kann vorzugsweise Bestandteil jeweiliger Dateinamen sein, um damit die Zuordnung der Bilddatenelemente zueinander und/oder zu den jeweiligen Bildbereichsdatensätzen bzw. Gesichtsausschnitten und/oder den jeweiligen Perspektiven zu codieren.

Die Bilddatenbank 10 setzt sich somit im Prinzip aus zumindest zwei Teildatenbanken 14, 16 zusammen. Dabei umfasst die erste Teildatenbank 14 eine Vielzahl von ersten Bilddatenelementen (Fh1, Fh2, ... Fa1, Fa2, ...), die jeweils einen Gesichtsausschnitt (Haare, Augen, Ohren, Nase, ...) eines menschlichen Gesichts in einer ersten Perspektive (im dargestellten Beispiel in der Frontalansicht) darstellen, während die zweite Teildatenbank 16 die entsprechenden korrespondierenden Bilddatenelementen (Ph1, Ph2, ... Pa1, Pa2, ...) in einer zweiten Perspektive (im dargestellten Beispiel in der Profilansicht) darstellen. In Fig. 1 sind die Bilddatenelemente in der Teildatenbanken 14, 16 daher ohne den Zusatz "F" bzw. "P" eingezeichnet. Beispielsweise über den entsprechenden Dateinamen (wie bereits oben erwähnt) oder Index oder die entsprechende Position in den Teildatenbanken 14, 16 oder über eine entsprechende Verknüpfungstabelle in der Bilddatenbank 10 sind die einzelnen Bilddatenelemente jedes korrespondierenden Paares von Bilddatenelementen eindeutig einander zugeordnet. Analog zur Bilddatenbank 10 sind die Teildatenbanken 14, 16 in entsprechende Bildbereichsdatensätze (18a, 18b, ... 18f) bzw. (20a, 20b, ... 20f) gegliedert, von denen jeder dem entsprechenden Gesichtsausschnitt entspricht.

Zur Erstellung einer Phantombildes wählt ein Benutzer nun vorzugsweise mittels einer Benutzerschnittstelle zunächst einen Gesichtsausschnitt bzw. den entsprechenden Bildbereichsdatensatz an, um aus der Liste von Bilddatenelementen dieses Bildbereichsdatensatzes ein Bilddatenelement für die Anzeige in einem ersten Anzeigebereich 22 auszuwählen. Beispielsweise könnte zunächst der erste Bildbereichsdatensatz 18a der ersten Teildatenbank 14 aktiviert werden, um dem Benutzer die Liste (h1, h2, h2, ...) verfügbarer Bilddatenelemente anzuzeigen, welche verschiedene Frisuren darstellen. Anschließend wird eine Benutzereingabe zur Auswahl eines ersten Bilddatenelements 26a des ersten Gesichtsausschnitts, nämlich der Haare, erfasst. Dieses erste Bilddatenelement 26a des ersten Gesichtsausschnittes, welches im Beispiel von Fig. 1 mit "h35" indiziert ist, wird im ersten Anzeigebereich 22 einer grafischen Benutzerschnittstelle grafisch dargestellt. Im Anzeigebereich 22 werden somit die ausgewählten Haare in der Frontalansicht gezeigt.

Vorzugsweise wird anschließend ein weiterer Bildbereichsdatensatz 18b der ersten Teildatenbank 14 aktiviert, um dem Benutzer eine Liste (a1, a2, a3, ...) verfügbarer Bilddatenelemente zur Auswahl anzuzeigen, die im Beispiel von Fig. 1 verschiedene Augen darstellen. Daraufhin wird eine Benutzereingabe zur Auswahl eines ersten Bilddatenelements 26b des zweiten Gesichtsausschnitts, nämlich die Augen, erfasst. Dieses erste Bilddatenelement 26b des zweiten Gesichtsausschnittes (also des zweiten Bildbereichsdatensatzes 18b), welches im Beispiel von Fig. 1 mit "a23" indiziert ist, wird im ersten Anzeigebereich 22 einer grafischen Benutzerschnittstelle zusammen mit dem ersten Bilddatenelement des ersten Gesichtsausschnitts grafisch dargestellt. Im Anzeigebereich 22 werden somit die ausgewählten Haare zusammen mit den ausgewählten Augen in der Frontalansicht gezeigt.

Vorzugsweise umfasst das Verfahren nun ein Erfassen einer Benutzereingabe zur Positionierung und/oder Orientierung und/oder Dimensionierung der Darstellung des ersten Bilddatenelements "a23" des zweiten Gesichtsausschnitts im ersten Anzeigebereich 22 relativ zur Darstellung des ersten Bilddatenelements "h35" des ersten Gesichtsausschnitts im ersten Anzeigebereich 22. Beispielsweise kann der Benutzer die Position und/oder Orientierung und/oder Form und/oder Größe der Augen relativ zu den Haaren im ersten Anzeigebereich beispielsweise mittels einer Computermaus verändern.

In Abhängigkeit von der Auswahl der ersten Bilddatenelemente 26a ... 26f werden vorzugsweise automatisch die korrespondierenden Bilddatenelemente 28a ... 28f aus der zweiten Teildatenbank 16 ermittelt und - gegebenenfalls in Abhängigkeit von einer vom Benutzer im ersten Anzeigebereich 22 vorgenommenen Positionierung und/oder Orientierung und/oder Dimensionierung - in einem zweiten Anzeigebereich 24 dargestellt.

Um die Bilddatenbank 10 in der beschrieben Form als Kombinationsdatenbank aufzubauen, werden vorzugsweise aus einem jeweiligen Quellenmaterial (Front-und Profilaufnahme von Personen) einzelne Elemente entnommen, die jeweils in einer Frontaldatenbank (erste Teildatenbank 14) bzw. einer Profildatenbank (zweite Teildatenbank 16) gespeichert werden. Diese Elemente zu den gleichen Gesichtsausschnitten (z.B. Frisuren bzw. Augen bzw. Ohren bzw. Nasen bzw. Münder bzw. Kleidungsstücke) werden vorzugsweise jeweils auf derselben Dateiebene, also im selben Bildbereichsdatensatz, gespeichert.

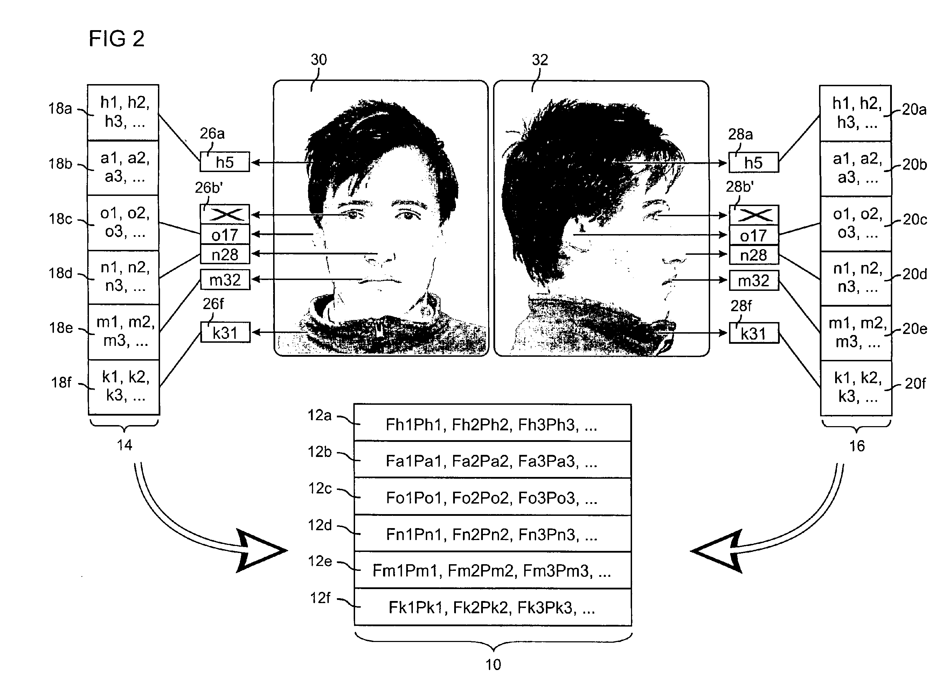

**Fig. 2** zeigt eine schematische Darstellung zur Veranschaulichung eines Verfahrens zur Erstellung einer Bilddatenbank (10) gemäß einer bevorzugten Ausführungsform der Erfindung. Dabei werden für vergleichbare Komponenten dieselben Bezugszeichen wie in Fig. 1 verwenden. Für weitere Details zu diesen Komponenten kann somit auch auf die entsprechende Beschreibung zu Fig. 1 verwiesen werden.

Als Quellenmaterial dienen dabei eine erste fotografische Abbildung 30 einer realen Person in der Frontalansicht und eine zweite fotografische Abbildung 32 derselben realen Person in der Profilansicht. Diese fotografischen Abbildungen werden in einzelne Gesichtsausschnitte unterteilt und es werden entsprechende erste Bilddatenelemente 26a, 26c, ... 26f sowie die dazu korrespondierenden zweiten Bilddatenelemente 28a, 28c, ... 28f erstellt. Die Bilddatenelemente werden in den entsprechenden Bildbereichsdatensätzen 18, 20, also der entsprechenden Dateiebene, der jeweiligen Teildatenbank (Frontaldatenbank 14 bzw. Profildatenbank 16) gemäß dem jeweiligen Gesichtsausschnitt abgespeichert.

Innerhalb der jeweiligen Dateiebene sowie der jeweiligen Teildatenbank erhalten die korrespondierenden Bilddatenelemente vorzugsweise dieselbe Positionierung und/oder dieselbe Numerierung. Sie werden sozusagen aufeinander bezogen referenziert. Jede Frisur oder jedes Augenpaar ist dabei als Dateielement anzusehen. Durch die gleiche Bezeichnung und Positionierung innerhalb der Dateiebene, werden aus diesen zunächst separat anzusehenden Dateielementen 26a, 28a so genannte Kombinationselemente [26a+28a] (in Fig. 2 beispielhaft mit "h5" bezeichnet), die fortan derart miteinander verknüpft sind, dass von dem einen Element ausgehend, sofort auf das jeweilige Gegenstück zurückgegriffen werden kann. So stellen beide Dateielemente denselben Inhalt, also im Wesentlichen denselben Gesichtsausschnitt, aus unterschiedlichen Ansichten (Perspektiven) dar. Die Information beider Perspektiven wird somit nicht nur aufgrund dieser Datenbankstruktur zusammengefasst, sondern auch optisch, im Hinblick auf die spätere Verwendung im Rahmen der Phantombilderstellung.

Aus diesen Kombinationselementen entsteht anschließend die so genannte Kombinationsdatenbank bzw. Bilddatenbank 10, welche nun die gesamten Bildinformationen beider Datenbanken umfasst.

Diese Kombinationselemente können nun zur Erstellung eines Phantombildes entweder aus der Frontal- oder Profilperspektive beispielsweise über die Anzeigebereiche 22 bzw. 24 separat verwendet werden. Dabei ist es unerheblich, mit welcher der beiden Perspektiven begonnen wird.

Da das verwendete bzw. jeweils ausgewählte Element (Bilddatenelement) jedoch über seine Bezeichnung und Position einen direkten Bezug zum Element der jeweils anderen ursprünglichen Teildatenbank 14 bzw. 16 herstellt, das zudem aus demselben bzw. korrespondierenden Quellenmaterial (zwei Ansichten derselben Person) gewonnen wurde, besteht trotz der anderen Perspektive eine absolute Konsistenz in geometrischer oder anatomische Hinsicht. Diese Merkmale des Kombinationselements bewirken, dass der Aufbau einer Perspektive immer auch bedeutet, dass die jeweils andere Perspektive ebenfalls aufgebaut wird. Ein separater Aufbau der anderen perspektivischen Darstellung, bei dem der Datenbestand erneut gesichtet werden muss, kann somit entfallen. So muss trotz der abschließenden Darstellung und Verfügbarkeit zweier Perspektiven effektiv nur eine Perspektive vollständig erstellt und bearbeitet werden. Die andere Perspektive wird vorzugsweise lediglich angepasst, um die individuellen Anpassungen eines Zeugen auch in dieser Darstellung berücksichtigen zu können.

Vorzugsweise ist die Position bzw. Referenzierung der Kombinationselemente beider zuvor erstellter Teildatenbanken 14, 16 innerhalb der Kombinationsdatenbank 10 identisch, was bei einer inhaltlichen Darstellung der Kombinationsdatenbank bewirkt, dass das jeweilige Kombinationselement immer zusammen mit seinem Partnerelement (dem korrespondierenden Element) dargestellt werden kann.

Die Bezeichnung eines Kombinationselements im Bereich der Frisuren-Ebene lautet beispielsweise gemäß Fig. 1: Ff35Pf35 (Ff = Frontal-Frisur, Pf = Profilfrisur, Frisur Nr. 35). Ein komplettes Phantombild gemäß Fig. 1 ließe sich demnach im Bezug auf die Struktur der Kombinationsdatenbank 10 und der daraus entnommenen Kombinationselemente folgendermaßen darstellen:
Ff35Pf35Fa23Pa23Fo14Po14Fn11Pn11Fm8Pm8Fk19Pk19

(Fa/Pa = Frontal-Augen/Profil-Augen, Fo/Po = Frontal-Ohren/Profil-Ohren, Fn/Pn = Frontal-Nase/Profil-Nase, Fm/Pm = Frontal-Mund/Profil-Mund, Fk/Pk = Fronal-Kleidung/Profil-Kleidung). Die Ziffern bezeichnen dabei vorzugsweise die genaue Lage innerhalb der entsprechenden Dateiebene, also dem jeweiligen Bildbereichsdatensatz.

Daraus ergibt sich eine Art Code, der jedem als Datei herausgegebenen Bild im Bereich der Bildinformationen angefügt werden kann, wodurch auch im Nachhinein nachzuvollziehen ist, welche Kombinationselemente bei der Erstellung verwendet wurden. Außerdem erschließt sich die Bildinformation nur dem Anwender der Kombinationsdatenbank 10, da nur er Zugriff auf die hinter der jeweiligen Bezeichnung stehenden Kombinationselemente hat. Der oben angegebene Code des kompletten Bildes könnte auch folgendermaßen gekürzt werden: FP/35/23/14/11/8/19

Voraussetzung dabei ist, dass die Reihenfolge der verwendeten Kombinationselemente in der Bilddatenbank 10 nicht geändert wird. Dieser Codierung können nun beliebig weitere Kürzel angefügt werden. Ein weiteres Beispiel wäre das Datum der Erstellung, das Kürzel der Dienststelle, sowie die vom Zeugen prozentual geschätzte Übereinstimmung des erstellten Bildes mit der gesuchten Person:
FP/35/23/14/11/8/19-22122010-TRK5-80

(Vorzugsweise steht TR dabei für Trier, K5 für das dortige Kriminalkommissariat 5, und die 80 für die seitens des Zeugen geschätzten 80 Prozent Übereinstimmung mit der gesuchten Person.)

So ist zum Beispiel auch nach Monaten noch ersichtlich, ob im entsprechenden Vorgang ein kombiniertes oder ein einzelnes Frontal- oder Profilphantombild angefertigt wurde. Ein einzelnes Frontal- oder Profilbild wäre dann am Anfang entsprechend mit "F" oder "P" gekennzeichnet, statt mit dem "FP" eines kombinierten Bildes. Diese Codierung erhöht insbesondere auch den Datenschutz, wie später noch eingehender dargestellt wird.

Im Prinzip wird hier eine identische Referenzierung zweier auf demselben Quellenmaterial beruhenden, aber in ihrer Ausrichtung (Perspektive) unterschiedlicher Teildatenbanken vorgenommen, wodurch in der Summe der einzelnen Elemente die Kombinationsdatenbank 10 entsteht, in der alle Bildinformationen zusammengefasst sind, ohne den eigenständigen Charakter und Gehalt dieser Informationen aufzuheben. Die Kombinationsdatenbank 10 beinhaltet somit aufeinander referenzierte Bildinformationen unterschiedlicher Ausrichtung (Perspektive), die aus derselben Bildquelle (derselben realen Person) stammen, die sowohl in der Kombination, als auch einzeln zur Anwendung kommen können.

Dabei kann die Kombinationsdatenbank 10 auf völlig unterschiedliche Weise genutzt werden. Es ist zum einen möglich, dass ein Phantombild mittels des ersten Ausgabebereichs 22 ausschließlich in der Frontaldarstellung erstellt wird, wenn der Zeuge auch nur diese Perspektive beobachtet hat. Ebenso verhält es sich mit der Erstellung im Profil beispielsweise auf Basis des zweiten Ausgabebereichs 24. Zusätzlich ergibt sich die vorgestellte Möglichkeit der kombinierten Erstellung, also der Fertigung eines kombinierten Phantombildes, welches beide Perspektiven, bei entsprechender Beobachtung des Zeugen darstellen kann. Dies kann, aufgrund der speziellen Datenbankstruktur, auch parallel geschehen, indem man beide Ansichten innerhalb einer Bildbearbeitungsanwendung gleichzeitig bearbeitet, z.B. nebeneinander oder übereinander.

Der Benutzer der Kombinationsdatenbank ist also nicht gezwungen, auf andere Datenbankstrukturen zurückzugreifen. Die Kombinationsdatenbank 10 bleibt flexibel einsetzbar. Sie beinhaltet trotz ihrer kombinierten Struktur immer noch die Möglichkeit, im Bereich der einzelnen Perspektive, Einzelbilder zu erstellen. Die Verwendung der Kombinationsdatenbank stellt im Bereich der Phantombilderstellung eine sehr effiziente Möglichkeit dar, ein solches Bild gleichzeitig in zwei Perspektiven zu erstellen. Eine Verwendung zweier inhaltlich getrennter Datenbanken würde nicht nur dazu führen, dass dem Zeugen eine erneute komplette Auswahlprozedur bevorstünde, sondern würde auch nicht zu einem optisch übereinstimmenden bzw. anatomisch konsistenten Ergebnis führen, was letztendlich die Glaubwürdigkeit beider Darstellungen in Frage stellen könnte.

Ergänzend sei hier angemerkt, dass der Bestand der Profildatenbank vorzugsweise zusätzlich noch gespiegelt wird, um die Möglichkeiten der Kombinationsdatenbank auch im Hinblick auf die andere (z.B. linke) Gesichtshälfte nutzbar zu machen.

Aufgrund dieser Funktionsweise ergeben sich sehr nützliche Möglichkeiten in der Darstellung von Gesichtern im Rahmen der Phantombilderstellung. Vorzugsweise bieten die unabhängig voneinander zu verwendenden Inhalte der Kombinationsdatenbank die Möglichkeit einer so genannten Prognosefunktion. Diese lässt sich insbesondere in Fällen anwenden, in denen der Zeuge nur eine der beiden Perspektiven beobachten konnte. Hier wird zur Erstellung des Phantombildes vorzugsweise zunächst nur der Teil der Kombinationsdatenbank genutzt, welcher der vom Zeugen tatsächlich wahrgenommenen Perspektive entspricht. Anschließend wird der jeweils andere, also korrespondierende Teil der Kombinationsdatenbank, dessen Kombinationselemente durch die spezielle Strukturierung der Datenbank mit denen vom Zeugen ausgewählten Kombinationselemente identisch sind, genutzt.

Da der Zeuge mit seiner Auswahl der Kombinationselemente bereits auch die damit verbundenen Elemente der anderen Perspektive auswählt, lässt sich nun das Phantombild auch in der anderen, vom Zeugen nicht beobachteten Perspektive darstellen. Diese zusätzliche, vom Zeugen nicht beobachtete Darstellung ist dabei als Prognose anzusehen und eröffnet damit sehr hilfreiche Möglichkeiten der Darstellung gesuchter Personen.

Die aus der Anwendung der Kombinationsdatenbank resultierende Erstellung eines Front- und Profilbildes einer Person eignet sich zudem zur Berechnung eines dreidimensionalen Objekts, wodurch die Darstellungsmöglichkeiten eines Phantombildes sehr effizient und mit hoher Verlässlichkeit vorzugsweise auf jeden denkbaren Beobachtungswinkel erweitert werden. Zudem dient das aus beiden Ansichten berechnete dreidimensionale Objekt vorzugsweise dazu, alternativ vom Zeugen wahrgenommene Beobachtungsperspektiven darzustellen und die Beobachtungsbedingungen, wie zum Beispiel die Lichtverhältnisse oder Mimik zu simulieren.

Dadurch bekommt der Zeuge eine sehr anschauliche Möglichkeit, das Phantombild im Hinblick auf alle Umstände der Beobachtung umfassend zu beurteilen. Dadurch wird nicht nur die Berücksichtigung aller Parameter zur Phantombilderstellung optimiert, sondern die gesuchte Person könnte auch aus der aussagekräftigsten Perspektive dargestellt werden. Vorzugsweise können mit Hilfe der Darstellung zusätzlicher Perspektiven auch noch Korrekturen an den zweidimensionalen Phantombildern vorgenommen werden. Dabei ergibt sich aus dem Erstellungsprozess des Bildes zusätzlich der Effekt, dass der Zeuge durch die Arbeit an einem dreidimensionalen Objekt nicht überfordert wird.

Eine weitere vorteilhafte Einsatzmöglichkeit der Erfindung innerhalb der visuellen Personenfahndung ergibt sich aus der so genannten Täterlichtbild-Rekonstruktion. Hier kann mit Hilfe der Kombinationsdatenbank das Abbild eines Täters rekonstruiert werden, das nur auf der Sequenz eines Überwachungsfilmes zu sehen ist und das nicht oder in nicht ausreichender Qualität vorliegt und somit nicht für Fahndungszwecke oder automatisierte Vergleichssysteme genutzt werden kann.

Vorzugsweise beginnt die Täterlichtbild-Rekonstruktion mit der Auswahl geeigneter Sequenzen aus dem vorliegenden Videomaterial. Geeignet sind die Sequenzen, die sich mit den jeweiligen Kombinationselementen der Kombinationsdatenbank vergleichen lassen. Ist die Person dabei in der Frontale und im Profil zu sehen, kommt die Kombinationsdatenbank gemäß den beschriebenen bevorzugten Ausführungsformen vorzugsweise im vollen Umfang zum Einsatz, insbesondere soweit auch dort die Frontale und das Profil in entsprechenden Teildatenbanken hinterlegt sind.

Nachdem die ähnlichsten Elemente einer Perspektive selektiert wurden, können sie individuell auf das Aussehen der Person angepasst werden, die in den Sequenzen zu sehen ist. Durch die Funktionsweise der Kombinationsdatenbank kann die Person nun aus zumindest zwei verschiedenen Perspektiven rekonstruiert werden. Eine weitere Anpassung insbesondere relativer Positionen und/oder Orientierungen und/oder Dimensionierungen einzelner Bilddatenelemente garantiert eine höchstmögliche Übereinstimmung mit dem Original auf der Film- oder Bildsequenz.

Jede Perspektive kann abschließend nochmals im Hinblick auf die entsprechenden Sequenzen aus dem Überwachungsmaterial beurteilt werden. Da beide Bilder durch die Kombinationsdatenbank aufeinander bezogen sind, kann jede Korrektur einer Perspektive problemlos auch auf die jeweils andere Perspektive angewandt werden, was anhand weiterer bevorzugter Ausführungsformen der vorliegenden Erfindung weiter unten noch eingehender beschreiben wird. Durch die Möglichkeit, das Aussehen der Person aus zwei Perspektiven heraus zu rekonstruieren, erhöht sich die Verlässlichkeit einer solchen Täterlichtbild-Rekonstruktion erheblich.

Wenn man nun bedenkt, dass Videomaterial bisher oft gar nicht, oder nur sehr eingeschränkt für die Ermittlungen verwendet werden konnte, stellt die Täterlichtbild- Rekonstruktion mit Hilfe der vorliegenden Erfindung einen gewaltigen Fortschritt dar, da nun mit gleich zwei Ansichten der auf dem Bildmaterial zu sehenden Person gefahndet werden kann. Um das mit einem Original-Bildausschnitt des zur Verfügung stehenden Materials zu erreichen, benötigt man eben zumindest eine Sequenz, in der die Person in ausreichender Weise, bezogen auf alle Gesichtsmerkmale, in einem bestimmten Moment zu sehen ist. Der Täterlichtbild-Rekonstruktion reicht dabei die Summe aller im gesamten Material zu sehenden Sequenzen aus. Der jeweilige Moment muss nur für jeweils ein Gesichtsmerkmal optimal sein und nicht für das gesamte Gesicht.

Da nun zwei anatomisch zueinander konsistente Ansichten derselben Person vorliegen, sind nun alle Bildinformationen vorhanden, die für eine Berechnung einer dreidimensionalen Darstellung effizient genutzt werden können. Die dreidimensionale Darstellung hat dabei den Vorteil, das Abbild der gesuchten Person umfassend und aus jedem Winkel darzustellen. Wenn das dreidimensionale Objekt berechnet ist, kann es parallel zu den vorliegenden Bildsequenzen positioniert werden, was einen Abgleich zwischen der exakten Positionierung des Kopfes innerhalb der Sequenz und der Übereinstimmung des dreidimensionalen Objekts mit der Sequenz in optimaler Weise ermöglicht. Zudem kann ein dreidimensionales Objekt noch mehr Informationen darstellen, als die Darstellung zweier Perspektiven, was die Öffentlichkeitsfahndung erheblich verbessert.

Ebenso ist es denkbar, dass solche Rekonstruktionen auch für die Recherche mit Gesichtserkennungs-Systemen verwendet werden, was aufgrund des in den Überwachungsfilm-Sequenzen zu sehenden Materials bisher nicht oder zumindest nicht mit der selben Effizienz möglich gewesen wäre. Durch die Täterlichtbild-Rekonstruktion auf Grundlage der vorliegenden Erfindung kann vermieden werden, dass Film- oder Bildmaterial eines Täters, das aufgrund seiner Qualität nicht für eine Veröffentlichung oder einen Vergleich im Rahmen der Gesichtserkennung geeignet ist, nicht mehr verwendet wird, wenn es ansonsten alle Bildinformationen enthält, die für eine sinnvolle Rekonstruktion der gesuchten Person ausreichend sind.

In einer bevorzugten Ausführungsform eines erfindungsgemäßen Verfahrens zur Erstellung einer Bilddatenbank für Phantombilder lässt sich ein hohes Maß an Sicherheit im Datenschutz erreichen. Vorzugsweise wird dabei erreicht, dass keine der verwendeten fotografischen Abbildungen realer Personen nachträglich wieder zusammengesetzt werden könnte.

Ein Lichtbild, also insbesondere eine der fotografischen Abbildungen 30, 32, ließe sich nachträglich dann eventuell rekonstruieren, wenn der genaue Ablageort der entnommenen und gespeicherten Bildelemente innerhalb der aufgebauten Datenbank bekannt wäre. Insbesondere bei der Kombinationsdatenbank 10 wäre die Möglichkeit einer Rekonstruktion unerwünscht, da sich hier sowohl die Frontale als auch das Profil einer real existierenden Person nachträglich wieder zu einem kompletten Bild zusammengesetzt werden könnte.

In einer bevorzugten Ausführungsform löst die Erfindung dieses zusätzliche Problem, indem aus einer fotografischen Abbildung 30, 32, dessen einzelne Bildelemente zum Datenbank-Aufbau verwendet werden, trotz ihrer Eignung, nie alle Bildelemente selektiert und gespeichert werden. Statt dessen wird stets eine bewusste Lücke gelassen, damit dieses Lichtbild, also die fotografische Abbildung 30, 32, in seinen Bestandteilen niemals komplett auftauchen kann. Selbst wenn also jemand den genauen Ablageort der Bildelemente einer bestimmten Person innerhalb der Datenbank wüsste, wäre es nicht möglich, das komplette Lichtbild einer Person nachträglich wieder zusammen zu setzen. In Fig. 2 ist dies dadurch veranschaulicht, dass vorzugsweise mittels eines Zufallsgenerators zumindest ein Bildelement bzw. Bilddatenelement 26b', 28b' bzw. ein entsprechender Gesichtsausschnitt ausgewählt wird. Dieses Bilddatenelement 26b', 28b' wird nicht gespeichert.

In einer weiteren bevorzugten Ausführungsform wird sichergestellt, dass die Positionierung der einzelnen Bildelemente innerhalb der Datenbank so gestaltet wird, dass die verwendeten Bildelemente (Bilddatenelemente) einer bestimmten Person nicht mehr aufgrund einer Position innerhalb der Bilddatenbank zusammengesetzt werden können. Insbesondere wird die genaue Positionierung der von einem Lichtbild verwendeten Bildelemente innerhalb der jeweiligen Dateiebene (Bildbereichsdatensätze) nicht mit einer fortlaufenden Numerierung vorgenommen. Vorzugsweise erhalten alle Bildelemente eine zufällige Ziffer innerhalb ihrer Dateiebene. So wird gewährleistet, dass die ursprünglich zusammengehörigen Bilddatenelemente in der Kombinationsdatenbank nicht mehr über die selbe Ziffer zusammengeführt werden können.

Diese Verfahrensweise macht es nun im Zusammenspiel mit der bewussten Platzierung von Lücken innerhalb der jeweiligen Datenbank unmöglich, ein ursprünglich beim Aufbau der Datenbank verwendetes Originalbild nachträglich wieder zusammenzufügen.

In einer bevorzugten Ausführungsform eines erfindungsgemäßen Verfahrens zur Erstellung von Phantombildern können die Positionierung und/oder Orientierung und/oder Dimensionierung der Darstellung aller ersten und/oder zweiten und/oder gegebenenfalls weiterer Bilddatenelemente vorzugsweise aller Gesichtsausschnitte im jeweiligen Anzeigebereich vorzugsweise zu jedem Zeitpunkt während der Erstellung eines Phantombildes und/oder auch danach individuell angepasst werden. Dafür sorgt vorzugsweise eine kombinierte Bearbeitungsfunktion, welche vorzugsweise zusammen mit einem 3D-Editiermodus einer bevorzugten Ausführungsform der vorliegenden Erfindung aktiviert wird und vorzugsweise eine simultane Anpassung insbesondere aller unterstützen oder angezeigten Perspektiven ermöglicht. Dazu sind vorzugsweise die Positionen und/oder Orientierungen und/oder Dimensionierungen der Darstellung oder von Teilbereichen oder Ausschnitten der Darstellung eines Gesichtsbereichs also korrespondierender Bilddatenelemente in den verschiedenen Anzeigebereichen miteinander verknüpft. Diese Verknüpfung der Darstellungen unterschiedlicher Perspektiven wird weiter unten anhand bevorzugter Ausführungsformen noch genauer beschrieben.

Besonders durch diese Anpassungstechnik ist der Anwender eines Verfahrens bzw. Systems nicht nur auf genau die Gesichtsteile (also Bilddatenelemente) beschränkt, die in der Datenbank vorgehalten werden. Vielmehr kann er ausgehende von einer Vorgabe aus der Datenbank eine weitere individuelle Anpassung von Details (z.B. Position, Orientierung und/oder Dimensionierung) der Darstellungen vornehmen, um das Ergebnis beispielsweise anhand der Bearbeitung in einer Perspektive noch genauer an die Täterbeschreibung durch den Zeugen anzupassen. Dadurch muss die Datenbank selbst nicht so umfangreich sein, um feinste Abstufungen in den Details der Gesichtsausschnitte abzudecken. Beispielsweise können verschiedene Nasenbreiten, -längen oder - neigungen in gröberer Abstufung ausreichen, um dennoch durch die individuelle Bearbeitung mittels entsprechender Benutzereingaben auch Zwischenwerte darstellen zu können.

Insgesamt kann damit trotz einer relative kleinen Datenbank ein hoher Grad an Individualisierung gewährleistet werden, um die Erinnerung des Zeugen bestmöglich und effektiv visualisieren zu können, wobei durch die Verknüpfung der unterschiedlichen Perspektiven einerseits der Arbeitsaufwand bei der Erstellung eines Phantombildes gering gehalten wird und andererseits die perspektivische Konsistenz der Darstellungen in unterschiedlichen Perspektiven im wesentlichen gewahrt bleibt. Ein besonderes Vorteil, der damit erreicht wird, ist der hohe Grad der Individualisierung, der bereits anhand zweidimensionaler Darstellungen erreicht wird.

Das Zeitproblem im Hinblick auf die Konzentrationsfähigkeit des Zeugen wird durch die hier beschriebene Phantombilddatenbank sehr effizient gelöst. So dauert eine Phantombilderstellung mit der Visualisierung von mehreren Perspektiven und deren individueller Anpassung beispielsweise ca. 90 Minuten, was einen erheblichen Vorteil gegenüber anderen möglichen Ansätzen bedeutet. So kann beispielsweise nach weniger als einer Stunde der Auswahlprozess der Bilddatenelemente bereits abgeschlossen sein. Den Rest der Zeit kann die Individualisierung durch eine entsprechende Bearbeitung insbesondere hinsichtlich der Positionierung, Orientierung und/oder Dimensionierung der Darstellungen der einzelnen Bilddatenelemente in Anspruch nehmen. Dabei wird durch eine insbesondere automatisch synchronisierte Anpassung verschiedener Perspektiven die erforderliche Information nur einmal beim Zeugen abgefragt. Dabei ist er noch nicht einmal gezwungen, sich auf eine Perspektive während der Anpassung festzulegen. Er kann, bezogen auf die verschiedenen Perspektiven und der darin dargestellten Inhalte, während der Bearbeitung zwischen den Ansichten wechseln. Dadurch wird die Information beim Zeugen effektiv abgefragt. Es ist nicht zu befürchten, dass er irritiert wird, da die Änderungen vorzugsweise simultan ablaufen.

Obwohl mehrere Perspektiven dargestellt werden, investiert der Zeuge genauso viel Zeit und Mühe, als würde er nur an einer Perspektive arbeiten. Eine besondere Verbesserung, die die Erfindung leistet, liegt nicht nur in der Ergonomie. Ein noch entscheidenderer Effekt ist, dass die Phantombilderstellung in einem gewissen Zeitrahmen ablaufen kann und der Zeuge durch den Zeitaufwand oder durch den Umfang an abzuarbeitenden Inhalten physisch und psychisch nicht überfordert wird. Damit erreicht die hier beschriebene, computergestützte Phantombilderstellung eine deutliche Verbesserung der Aussagekraft und des Wiedererkennungswertes von Phantombildern. In vielen herkömmlichen Verfahren gab es durchaus einen beträchtlichen Anteil an unbrauchbaren oder unzuverlässigen Ergebnissen, der nicht zuletzt auf eine Überforderung der Zeugen zurückzuführen war.

In einer bevorzugten Ausführungsform umfasst das Verfahren bzw. ein entsprechendes Computersystem eine Alterungsfunktion, welche ausgelegt ist, das Alter einer dargestellten Person individuell nach den Wünschen des Zeugen anzupassen ("Aging"). Somit kann auch darauf verzichtet werden, für möglichst verschiedene Datenbankelemente bereits jede denkbare Altersdarstellung in der Datenbank vorzuhalten.

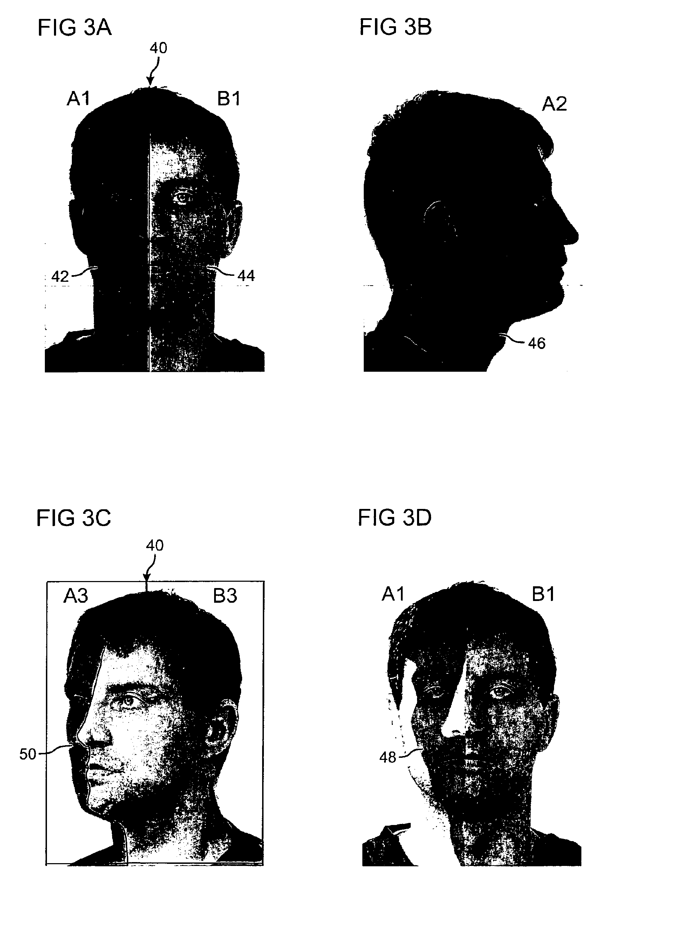

**Fig. 3A-D** veranschaulicht weitere Funktionalitäten gemäß bevorzugter Ausführungsformen der Erfindung. Insbesondere wird demnach ein kombiniertes Bearbeitungswerkzeug zur Verfügung gestellt, welches verschiedene Perspektiven miteinander verknüpft und eine simultane und perspektivisch konsistente Bearbeitung der grafischen Darstellungen erlaubt.

Mittels des kombinierten Bearbeitungswerkzeugs können beispielsweise beide Gesichtshälften und/oder unterschiedliche Perspektiven (also die grafischen Darstellungen in verschiedenen Anzeigebereichen) simultan bearbeitet werden. Beispielsweise wird dabei der Augenabstand und/oder die Breite der Nasenflügel und/oder ein seitliches Abstehen der Ohren und/oder eine Lage und/oder ein Verlauf der Mundwinkel und/oder die Breite/Fülle der Lippen, usw. individuell angepasst.

In einer bevorzugten Ausführungsform wird dabei von einer Spiegelsymmetrie des Gesichts ausgegangen. Wenn also individuelle Veränderungen in einer Gesichtshälfte vorgenommen werden, sollen bei einer Symmetrie des Gesichts dieselben Veränderungen - in gespiegelter Weise - auch auf der anderen Gesichtshälfte erfolgen. Soweit ein Anzeigebereich das Gesicht in einer symmetrischen Perspektive, insbesondere in einer Frontalansicht (z.B. Fig. 3A), zeigt, kann einfach ein entsprechendes Bearbeitungswerkzeug an einer Mittellinie (Profillinie) 40 der Darstellung des Gesichts gespiegelt werden und eine entsprechende Bearbeitung auf beiden Gesichtshälften A1 und A2 simultan erfolgen. Eine exakte Frontalansicht hat eine hohe Symmetrie. Die Darstellung des Gesicht kann daher sehr einfach automatisiert in zwei gleich große Hälften geteilt werden, welche durch die Mittellinie 40 voneinander getrennt sind. Hier würde es im Prinzip ausreichen, beispielsweise bei Korrekturen der Nasenflügel, mit einem gespiegelten Werkzeug zu arbeiten, das von der Mittellinie 40 des Gesichtes ausgehend in den selben Abständen eingesetzt wird. Es wird also vorzugsweise ein erster Bearbeitungsbereich 42 und ein zweiter Bearbeitungsbereich 44 der gewählten Perspektive simultan bearbeitet.

In einer bevorzugten Ausführungsform wird diese erste Perspektive als Frontalansicht in einem ersten Anzeigebereich grafisch angezeigt, während als zweite Perspektive in einem zweiten Anzeigebereich eine Profilansicht dargestellt wird (z.B. Fig. 3B). Besonderes bevorzugt ist die darin dargestellte Gesichtshälfte (in Fig. 3B ist es die rechte Gesichtshälfte A2) über das kombinierte Bearbeitungswerkzeug mit der entsprechenden Gesichtshälfte A1 der ersten Perspektive derart gekoppelt, dass grafische Bearbeitungen in der ersten Perspektive der Gesichtshälfte A1 auf die zweite Perspektive dieser Gesichtshälfte A2 übertragen werden. Insbesondere werden vertikale Komponenten von Verschiebungen einzelner Pixel und/oder Ausschnitte von Bilddatenelementen oder ganzer Bilddatenelemente auch in den korrespondierenden Elementen der zweiten Perspektive als entsprechende Veränderungen der vertikalen Position(en) übernommen. Entsprechendes gilt bei einer direkten Bearbeitung der zweiten Perspektive, deren vertikale Komponenten in der ersten Perspektive A1 übernommen werden. Die horizontalen Komponenten bleiben dabei vorzugsweise wechselseitig unberücksichtigt. So wirkt sich beispielsweise eine kleine Korrektur in der Nasenbreite nicht auf die Profilansicht aus.

Ist allerdings die Darstellung beider Gesichtshälften nicht symmetrisch, weil z. B. die Darstellungs- oder Betrachtungsrichtung nicht in der Symmetrieebene des Gesichts liegt (z.B. Fig. 3C), kann nicht einfach ein Bearbeitungswerkzeug gespiegelt werden. Die Erfindung bietet allerdings eine einfache und dennoch überraschend effiziente Möglichkeit, um beispielsweise auch in einer Teilprofilansicht eine schnelle Bearbeitung beider Gesichtshälften zu ermöglichen, ohne den perspektivischen Eindruck einer Symmetrie des Gesichts störend zu beeinträchtigen.

So stellt zumindest ein Anzeigebereich der grafischen Benutzeroberfläche eine Teilprofilansicht dar, wie dies beispielhaft in Fig. 3C zu sehen ist. Bevorzugt weicht der Betrachtungswinkel dabei nicht weiter als 45° (Halbprofil) von der Frontalansicht ab. Bei der Teilprofilansicht von Fig. 3C sind Details der abgewandten Gesichtshälfte A3 verborgen. Teile des Mundes, der Augen und der Frisur sind nicht mehr sichtbar. Würde man an dieser Stelle nun versuchen, Details einer Frontaldarstellung auf das Teilprofil (z.B. Halbprofil) zu übertragen, wäre möglicherweise, ohne eine entsprechende Funkton zur korrekten Übertragung dieser Daten, nicht mehr gewährleistet, dass die Darstellung beider Ansichten nach dieser Anpassung übereinstimmt. Die Ausgestaltung der Änderungen müsste ohne Hilfsmittel vom Anwender geschätzt werden, was zu Ungenauigkeiten führt, die einer übereinstimmenden Darstellung entgegenstehen.

Mit dem kombinierten Bearbeitungswerkzeug wird nun erreicht, dass Symmetrieeigenschaften des Gesichts und/oder die Konsistenz unterschiedlicher Perspektiven mit überraschender perspektivischer Genauigkeit auf sehr einfache und effiziente Weise automatisch berücksichtigt werden.

Bei einem Halbprofil weist die Darstellung selbst eines symmetrischen Gesichts eine Asymmetrie auf, weil es zu einer bestimmten Seite gewandt ist. Auf der dem Betrachter abgewandten Seite reduziert sich folglich der Raum, den die Gesichtsteile einnehmen, während er auf der dem Betrachter zugewandten Seite gezerrt wird, also mehr Raum einnimmt. Um dennoch eine automatische und perspektivisch korrekte Anpassung der Darstellung von Symmetrieeigenschaften des Gesichts zu erreichen, wird vorzugsweise der Grad der Abweichung des Halbprofils gegenüber der Frontaldarstellung ermittelt. Ein genaues Halbprofil zeigt vorzugsweise zu einem Drittel die abgewandte Seite und zu zwei Dritteln die dem Betrachter zugewandte Seite. Daraus ergibt sich ein Verhältnis von 2:1, was die Maße der beiden Gesichtshälften anbelangt. Korrekturen auf der zugewandten Seite nehmen also den doppelten Raum ein, wie die auf der abgewandten Seite. Diesem Umstand trägt das kombinierte Bearbeitungswerkzeug durch einen entsprechenden Skalierungsfaktor Rechnung. Insbesondere wird dazu ein Teilprofil-Teilprofil-Skalierungsfaktor ermittelt bzw. festgelegt, der die Skalierung zwischen der rechten Gesichtshälfte A3 und der linken Gesichtshälfte B3 in der Teilprofilansicht festlegt, so dass Änderungen auf der einen der beiden Gesichtshälften entsprechend horizontal skaliert auf die andere Gesichtshälfte übertragen werden können.

In einer bevorzugten Ausführungsform ist es allerdings nicht notwendig, dass eine entsprechende Symmetrie des Gesichts gewahrt bleibt. Vielmehr kann diese Symmetriefunktion auch deaktiviert werden. Dies ist besonders dann wünschenswert, wenn das Gesicht gezielt asymmetrisch erstellt werden soll. Dennoch ist es auch in diesem Fall wünschenswert, eine Konsistenz der unterschiedlichen Perspektiven sicherzustellen. Auch hier kommt das kombinierte Bearbeitungswerkzeug vorteilhaft zum Einsatz, indem es jede der Gesichtshälften in den unterschiedlichen Perspektiven insbesondere durch entsprechende Skalierungsfaktoren miteinander verknüpft. So sind vorzugsweise die rechten Gesichtshälften A1, A2 und A3 der Frontalansicht (z.B. Fig. 3A), der Profilansicht (Fig. 3B) und der Teilprofilansicht (Fig. 3C) zumindest teilweise über entsprechende Skalierungsfaktoren miteinander verknüpft. Entsprechendes gilt für die linken Gesichtshälften B1 und B3 der Frontalansicht (z.B. Fig. 3A) und der Teilprofilansicht (Fig. 3C). Dabei findet analog zur bereits beschriebenen Verknüpfung der beiden Gesichtshälften A3 und B3 über einen Teilprofil-Teilprofil-Skalierungsfaktor die Verknüpfung der rechten Gesichtshälften A1 und A3 zwischen der Frontalansicht und der Teilprofilansicht durch einen ersten Teilprofil-Frontal-Skalierungsfaktor und die Verknüpfung der linken Gesichtshälften B1 und B3 zwischen der Frontalansicht und der Teilprofilansicht durch einen zweiten Teilprofil-Frontal-Skalierungsfaktor statt.

Eine Pixelveränderung in der Frontalen wird durch das kombinierte Bearbeitungswerkzeug unter Berücksichtigung des entsprechenden Skalierungsfaktors auf das Halbprofil übertragen und umgekehrt. Dabei werden innerhalb der direkt bearbeiteten Perspektive jeweils alle Pixel berücksichtigt, die zu Gesichtsbereichen gehören, die auch in der jeweils anderen Perspektive sichtbar sind. Diese Bereiche bilden somit einer Bearbeitungsbereich des kombinierten Bearbeitungswerkzeugs.

Vorzugsweise werden diese Bearbeitungsbereiche in den jeweiligen Perspektiven insbesondere zumindest teilweise ermittelt. So stellt Fig. 3A insbesondere einen ersten Bearbeitungsbereich 42 einer ersten Perspektive dar, zu welchem in Fig. 3B ein korrespondierender erster Bearbeitungsbereich 46 einer zweiten Perspektive (der Profilansicht) existiert. Der erste Bearbeitungsbereich der ersten und zweiten Perspektive wird hierbei von der rechten Gesichtshälfte gebildet. Dabei sind der erster Bearbeitungsbereich 42 der ersten Perspektive und der erste Bearbeitungsbereich 46 der zweiten Perspektive insbesondere über das kombinierte Bearbeitungswerkzeug miteinander verknüpft.

In einer anderen oder weiter bevorzugten Ausführungsform könnte neben der in Fig. 3A dargestellten ersten Perspektive noch eine Halbprofilansicht gemäß Fig. 3C als zweite Perspektive vorgesehen sein. Während die linken Gesichtshälften B1 und B3 im Wesentlichen vollständig miteinander verknüpft werden können, wird auf der rechten Gesichtshälfte A3 der Teilprofilansicht ein Teil des Gesichts verdeckt, der in der Frontalansicht der rechten Gesichtshälfte A1 sichtbar ist. Es ist somit nur ein Teil der rechten Gesichtshälfte A1 mit der rechten Gesichtshälfte A3 verknüpft und für das kombinierte Bearbeitungswerkzeug relevant. Dazu wird zunächst vorzugsweise ein erster Bearbeitungsbereich 48 der rechten Gesichtshälfte ermittelt (z.B. Fig. 3D), welcher dann vorzugsweise pixelweise mit der rechten Gesichtshälfte A3 in Fig. 3C verknüpft wird.

Der Bearbeitungsbereich 48 kann beispielsweise derart ermittelt werden, dass zunächst ein dazu korrespondierender Bearbeitungsbereich 50 für die rechte Gesichtshälfte ermittelt wird, welcher sich insbesondere aus der Mittellinie und der Randlinie der rechten Gesichtshälfte in der Darstellung A3 ergibt. Beim Übergang zur Frontalansicht in Fig. 3D wird beispielsweise der gesamte ermittelt Bearbeitungsbereich außer dem auf Höhe der Nase liegenden Bereichs soweit horizontal nach verschoben, dass die Mittellinien (Profillinie) als gerade Linie in der Mitte zu liegen kommt. Außerdem wird der Bearbeitungsbereich noch gemäß einem entsprechenden Skalierungsfaktor für den Zusammenhang zwischen A1 und A3 horizontal skaliert. In einer anderen Ausführungsform kann der Bearbeitungsbereich 48 auch durch manuelle Unterstützung von Seiten ein Benutzers ermittelt werden, oder es wird eine Maskenvorlage hinterlegt, die insbesondere in Abhängigkeit von weiteren Parametern der einzelnen Perspektiven skaliert und individuell angepasst werden kann.

In einer bevorzugten Ausführungsform unterscheidet das Verfahren zumindest zwei verschiedene Bearbeitungsmodi, nämlich eine Anpassung im Hintergrund bzw. im Nachhinein und eine simultane Bearbeitung.

Die Anpassung im Hintergrund bzw. im Nachhinein kann insbesondere in einem 2D-Editiermodus erfolgen, in dem die vom kombinierten Bearbeitungswerkzeug bewirkten Veränderungen in der anderen, also nicht direkt bearbeiteten Perspektive nicht sofort, sondern beispielsweise erst nach Abschluss der Bearbeitung in der direkt bearbeiteten Perspektive aus eine Anforderung durch den Benutzer hin angezeigt werden. Hier wird die Veränderung zunächst beispielsweise ausschließlich in der Frontalansicht vorgenommen, bis sich die vom Zeugen gewünschte Optik ergibt. Mit den verknüpften Ansichten (z.B. einer Profilansicht und/oder einer Teilprofilansicht) passiert zunächst noch nichts. In einer Ausführungsform werden sie noch nicht einmal angezeigt. In einer anderen Ausführungsform wird bzw. werden sie zwar angezeigt, sie bleibt bzw. bleiben zunächst aber unverändert, um den Zeugen nicht abzulenken. Erst wenn der Zeuge mit der Anpassung in einer Perspektive zufrieden ist und das verknüpfte Bearbeitungsfeld bzw. das kombinierte Bearbeitungswerkzeug aktiviert bzw. die Verknüpfung hergestellt wird, kommt es zur Übertragung aller individuellen Änderungen auf die anderen, vom Zeugen eventuell auch beobachteten Perspektiven.

Für Zeuge und Anwender hat dies den Vorteil, dass man sich erst einmal nur auf eine Perspektive konzentrieren kann, was bei der Arbeit mit Zeugen besonders wichtig ist, die zwar mehrere Perspektiven des Täters gesehen haben, jedoch in der Erinnerung sehr auf eine bestimmte Ansicht fixiert sind.

Es kann allerdings vorkommen, dass man mit Augenzeugen zusammenarbeitet, die sich nicht ganz sicher sind, welche der möglichen Perspektiven sie am besten beobachtet bzw. in Erinnerung haben. Für diese Zeugen wird es wichtig sein, während des Anpassungsprozesses immer wieder zwischen den Perspektiven wechseln zu können. So ist ein Zeuge selbst hier nicht gezwungen, sich beim sensiblen Anpassungsprozess für eine Bearbeitungsperspektive zu entscheiden. Hierzu bietet ein erfindungsgemäßes Verfahren in einer bevorzugten Ausführungsform die Möglichkeit zur simultanen Bearbeitung mittels der kombinierten Bearbeitungswerkzeugs.

Garantiert wird diese spezielle Möglichkeit der Anpassung durch eine besondere Positionierung des simultan zum Einsatz kommenden Bearbeitungswerkzeuges. Dabei spielt die jeweilige Ausrichtung der verknüpften Perspektiven die entscheidende Rolle. Wie bereits ausgeführt, kommt es beispielsweise beim Halbprofil zu Erweiterung, bzw. Reduzierung des Bearbeitungsraumes, je nach Gesichtshälfte, während sich die Anpassung eines Profils nur auf die sichtbare Seite des Gesichts konzentriert. Dies ist vorzugsweise vorgesehen, dass, wenn das Werkzeug (insbesondere das primäre Bearbeitungswerkzeug) an der Gesichtshälfte der Frontalen zum Einsatz kommt, die auf der verknüpften Profilansicht nicht zu sehen ist, dort auch gar kein entsprechendes sekundäres Bearbeitungswerkzeug erst aktiviert wird. Es findet in dieser Situation in der Profilansicht auch keine simultane Bearbeitung statt.

Die Präzision der simultanen Anwendung des Bearbeitungswerkzeuges wird dabei besonders beim Halbprofil deutlich. Angenommen, in der Frontalansicht (z.B. Fig. 3D) kommt es zu einer signifikanten individuellen Verbreiterung der Nasenflügel, dann wird sich die simultane Bearbeitung vielleicht nur auf den Nasenflügel des Halbprofils (Fig. 3C) auswirken, der sich auf der dem Betrachter zugewandten Seite B3 befindet. Überschreitet diese Verbreiterung der Nasenflügel ein gewisses Maß, wird beim Halbprofil auch der Nasenflügel der abgewandten Seite sichtbar. Dabei kann durch eine Nachzeichnen des gedehnten Nasenflügels auf der linken Gesichtshälfte (in B1 oder B3) mittels einer Zeichenfunktion oder einer (gespiegelten und skalierten) Kopierfunktion des kombinierten Bearbeitungswerkzeugs automatisch auch der zuvor nicht sichtbare und in den ursprünglichen Bilddaten nicht vorhandene rechte Nasenflügel in der Halbprofilansicht von A3 generiert. Die simultane Anwendung des Werkzeugs kommt allerdings erst dann auf der abgewandten Seite (A3) zum Einsatz, wenn die Änderung auch sichtbar wird, wenn z.B. das primäre Bearbeitungswerkzeug innerhalb des dunkler eingefärbten Bearbeitungsbereichs 48 von Fig. 3D liegt. Außerhalb dieses Bereichs, also wenn beispielsweise das primäre Bearbeitungswerkzeug im hellen Bereich von A1 neben der Nase wirkt, schaltet sich das simultane Werkzeug automatisch ab bzw. das sekundäre Bearbeitungswerkzeug in der Teilprofilansicht ist deaktiviert, während es innerhalb des Bearbeitungsbereichs 48 automatisch zugeschaltet wird. Der Anwender kann sich ganz auf die ermittelten Bearbeitungsbereiche und Skalierungsfaktoren verlassen, die es dem Werkzeug erst dann erlauben simultan zu arbeiten, wenn die Änderung für das entsprechende Bearbeitungsfeld von Relevanz ist. Genauso verhält es sich mit dem Profil. Es kann nur immer das Bearbeitungsfeld der Frontalansicht mit der dargestellten Seite des Profils verbunden sein. Die im Profil nicht dargestellte Seite der Frontalansicht bleibt für die Bearbeitung deaktiviert.

Da die Veränderungen simultan ablaufen, ergeben sich für den Zeugen keine verwirrenden, separaten Anpassungsprozesse für die weiteren Perspektiven. Dies ist gerade bei der Arbeit mit mehreren Perspektiven besonders wichtig, denn der Zeuge muss sich nur einmal, und zwar für die Perspektive, die er am besten beobachten konnte, einem detaillierten Anpassungsprozess stellen. Er kann die Änderungen bei den übrigen Perspektiven auf sich wirken lassen. Dies ist im Hinblick auf die eingeschränkte Konzentrationsfähigkeit von Zeugen, gerade auch wenn es sich gleichzeitig um Opfer einer Straftat handelt, entscheidend für die Phantombilderstellung. Der Zeuge darf weder inhaltlich, durch die Arbeit an mehreren Perspektiven noch durch die Umsetzung von Änderungen überfordert werden, was die Erstellung in mehreren Ansichten nicht nur erleichtert, sondern erst ermöglicht.

Dieser hohe Grad an Übereinstimmung der mit Hilfe der hier beschriebenen Verfahren erreicht wird, macht es sogar möglich, Perspektiven zu visualisieren, die der Zeuge so nicht beobachtet hat. Dies ermöglicht es erstmals einen Vorteil im zweidimensionalen Bereich zu nutzten, den zuvor nur ein dreidimensionales Modell für sich beanspruchen konnte. Da bei den beschriebenen Verfahren nicht nur der explizite Datenbankinhalt, sondern auch individuelle Anpassungen der zweidimensionalen Gesichtsteile miteinander verknüpft wurden, nimmt jede Änderung automatisch Einfluss auf jede unterstützte Perspektive. Ein auf diesen exakten Daten basierendes 3D-Model kann im Bezug auf die Qualität und der Quantität der umgesetzten Zeugeninformationen nicht genauer in der Darstellung sein.

Wie bereits erwähnt können in Einzelfällen aufgrund der hohen Präzision sogar Ansichten des Täters visualisiert werden, die der Zeuge gar nicht gesehen hat, jedoch auf einer bestimmten Perspektive basieren. Dies ermöglicht die Verbindung zwischen der Verknüpfung des Inhalts der Teildatenbanken und die Möglichkeit der Umsetzung individueller Anpassungen simultan auf alle unterstützten Perspektiven. Wie wirkungsvoll der Einsatz einer solchen, vom Zeugen nicht beobachteten Perspektive sein kann, zeigt folgendes Beispiel:

Einmal angenommen, ein Zeuge kann den vermutlichen Täter nur aus der Frontalen beschreiben. In diesem Fall würde man diese Perspektive so genau wie möglich darstellen. Im Laufe der Ermittlungen stellt sich nun heraus, dass die Person vermutlich außerdem an einer anderen Örtlichkeit beobachtet wurde. Der Zeuge dieser Beobachtung hat die Person jedoch nur von der Seite gesehen. Zu diesem Zeitpunkt ist es somit noch unklar, ob es sich bei beiden Beobachtungen um dieselbe Person handelt. Um diese Frage zu beantworten ist es mit der verknüpften Phantombilddatenbank nun möglich, zunächst die entsprechend referenzierten Teile des Profils des ursprünglich in der Frontalen erstellten Bildes aufzurufen, um anschließend alle ebenso mit der Frontalen verknüpften individuellen Anpassungen des Zeugen auf das Profil anzuwenden. Dieses Profilbild könnte nun als prognostiziertes Profil der ursprünglich erstellten Frontalansicht dienen, und dem Zeugen vorgelegt werden, der die Person ausschließlich aus dieser Perspektive gesehen hat.

Selbstverständlich kann dieses System und Verfahren durch weitere Perspektiven ergänzt werden. Da die zweidimensionalen Daten auf fotografischen Aufnahmen beruhen, sind Aufbau und Erweiterung der Datenbank ohne großen Aufwand, kosten- und zeitsparend möglich. Die Erfindung ist auch nicht auf die Darstellung eines Gesichts und einer Oberbekleidung beschränkt. Vielmehr kann auch eine Darstellung des gesamten Täters umgesetzt werden. Insbesondere in Fällen, in denen die Person über eine spezielle Statur oder Körperhaltung verfügt, bietet diese Darstellung eine zusätzliche Möglichkeit, wichtige Informationen für die Fahndung nicht nur im Sinne einer bloßen Beschreibung zu verwenden, sondern mit allen vom Augenzeugen beschriebenen Details sichtbar zu machen. Insbesondere können auch Besonderheiten der Kleidung, im Hinblick auf die Kombination der Kleidungsstücke, eventueller Markenlogos, diverser Applikationen, Beschädigungen, farblicher Besonderheiten etc. dargestellt werden. Wünschenswert ist es dabei, jedes erhebliche Detail, das ein Augenzeuge theoretisch im Hinblick auf das Aussehen der Person beobachtet haben kann, in die Teildatenbanken zu integrieren.

Die Ganzkörperdarstellung bietet allerdings noch weitere Möglichkeiten. So kann das erzeugte komplette Abbild des Täters für eine möglichst realistische Tatrekonstruktion virtuell am Computer dargestellt werden. Während bereits bestehende Systeme zur Tatortrekonstruktion bestenfalls einen neutralen dreidimensionalen Dummy im virtuellen Tatort platzieren, wäre es mit der Ganzkörperdarstellung, wie sie im Rahmen der vorliegenden Erfindung sehr effizient realisiert werden kann, erstmals möglich, auch die Rekonstruktion des Täters in eine solche Rekonstruktion zu integrieren. So könnten erstmals wirklich alle relevanten Informationen rekonstruiert werden.

Die Rekonstruktion beschränkt sich somit nicht nur auf die räumliche Komponente, sondern bezieht alle personenbezogenen Informationen ebenfalls mit ein. Dies schließt selbstverständlich nicht nur die zweidimensionale Darstellung in mehreren Perspektiven mit ein, sondern vor allen Dingen deren dreidimensionale Umsetzung. Die Ganzkörperkomponente gliedert sich vorzugsweise in folgende Teildatenbanken:
- obere Körperhälfte
- untere Körperhälfte
- Accessoires

Unter Accessoires fallen vorzugsweise alle vom Täter mitgeführten Gegenstände, wie zum Beispiel Taschen, Tatwerkzeuge oder Waffen. Hier wird erneut die Stärke eines zunächst zweidimensionalen Systems deutlich. Wird beispielsweise eine vom Täter bei der Flucht zurückgelassene Tasche gefunden, reichen z.B. drei normale fotografische Aufnahmen in den vorzugsweise drei von der Phantombilddatenbank unterstützten Perspektiven, um sie für das komplette Spektrum der Darstellungsoptionen zu nutzen. Es wird beispielsweise kein 3D-Scanner benötigt, und die Daten müssen nicht zeitaufwendig aufbereitet werden, sondern sind vielmehr sofort verfügbar.

Die Änderungswünsche des Zeugen werden im zweidimensionalen Bereich in einer der möglichen Perspektiven zeichnerisch vorgenommen und anschließend mit der in der Beschreibung des kombinierten Bearbeitungsfeldes beschriebenen Methode im Hinblick auf die anderen Perspektiven simultan auf diese übertragen.

So entsteht eine in den verschiedenen Perspektiven völlig übereinstimmende Ganzkörperdarstellung der gesuchten Person. Die Darstellung des Kopfes und des gesamten Körpers lassen somit keine Darstellungslücke mehr offen. Die in der zweidimensionalen Phase gewonnenen Details bilden eine optimale Informationssammlung für die dreidimensionale Umsetzung. Mit dieser Darstellung ließen sich erstmals auch Informationen visualisieren, die sich nur aus der Bewegung des Täters ergeben, wie zum Beispiel eine spezielle Gangart oder Körperhaltung.

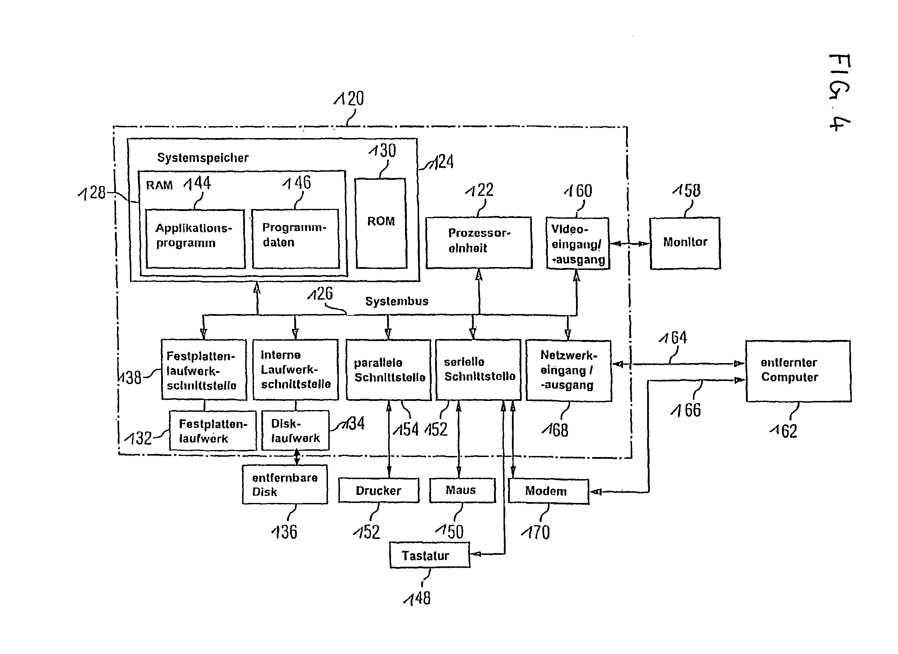

Bezugnehmend auf **Fig. 4** wird ein beispielhaftes System zum Implementieren der Erfindung beschrieben. Ein beispielhaftes System umfaßt eine universelle Rechnereinrichtung in der Form einer herkömmlichen Rechnerumgebung 120 z.B. ein "personal computer" (PC) 120, mit einer Prozessoreinheit 122, einem Systemspeicher 124 und einem Systembus 126, welcher eine Vielzahl von Systemkomponenten, unter anderem den Systemspeicher 124 und die Prozessoreinheit 122 verbindet. Die Prozessoreinheit 122 kann arithmetische, logische und/oder Kontrolloperationen durchführen, indem auf den Systemspeicher 124 zugegriffen wird. Der Systemspeicher 124 kann Informationen und/oder Instruktionen zur Verwendung in Kombination mit der Prozessoreinheit 122 speichern. Der Systemspeicher 124 kann flüchtige und nichtflüchtige Speicher, beispielsweise "random access memory" (RAM) 128 und "Nur-Lesespeicher" (ROM) 130 beinhalten. Ein Grund-Eingabe-Ausgabe-Sytem (BIOS), das die grundlegenden Routinen enthält, welche helfen, Informationen zwischen den Elementen innerhalb des PCs 120, beispielsweise während des Hochfahrens, zu transferieren, kann in dem ROM 130 gespeichert sein. Der Systembus 126 kann eine von vielen Busstrukturen sein, unter anderem ein Speicherbus oder ein Speichercontroller, ein peripherer Bus und ein lokaler Bus, welcher eine bestimmte Busarchitektur aus einer Vielzahl von Busarchitekturen verwendet.

Der PC 120 kann weiterhin ein Festplattenlaufwerk 132 zum Lesen oder Schreiben einer Festplatte (nicht gezeigt) aufweisen und ein externes Disklaufwerk 134 zum Lesen oder Schreiben einer entfernbaren Disk 136 bzw. eines entfernbaren Datenträgers. Die entfernbare Disk kann eine magnetische Disk bzw. eine magnetische Diskette für ein magnetisches Disklaufwerk bzw. Diskettenlaufwerk oder eine optische Diskette wie z.B. eine CD-ROM für ein optisches Disklaufwerk sein. Das Festplattenlaufwerk 132 und das externe Disklaufwerk 134 sind jeweils mit dem Systembus 126 über eine Festplattenlaufwerkschnittstelle 138 und eine externe Disklaufwerkschnittstelle 140 verbunden. Die Laufwerke und die zugeordneten computerlesbaren Medien stellen einen nichtflüchtigen Speicher computerlesbarer Instruktionen, Datenstrukturen, Programm-Modulen und anderer Daten für den PC 120 zur Verfügung. Die Datenstrukturen können die relevanten Daten zum Implementieren eines wie oben beschriebenen Verfahrens aufweisen. Obwohl die beispielshaft beschriebene Umgebung eine Festplatte (nicht gezeigt) und eine externe Disk 142 verwendet, ist für den Fachmann offensichtlich, daß andere Typen computerlesbarer Medien, welche computerzugreifbare Daten speichern können, in der beispielhaften Arbeitsumgebung verwendet werden können, wie z.B. magnetische Kassetten, Flash-Memory Karten, digitale Videodisketten, Random-Access-Speicher, Nur-Lesespeicher, usw..

Eine Vielzahl von Programm-Modulen, insbesondere ein Betriebssystem (nicht gezeigt) ein oder mehrere Applikationsprogramme 144, oder Programm-Module (nicht gezeigt) und Programmdaten 146, können auf der Festplatte, der externen Disk 142, dem ROM 130 oder dem RAM 128 gespeichert werden. Die Applikationsprogramme können zumindest einen Teil der Funktionalität, wie in Fig. 1 oder Fig. 2 gezeigt, umfassen.

Ein Benutzer kann Kommandos und Information, wie oben beschrieben, in den PC 120 anhand von Eingabevorrichtungen, wie z.B. einer Tastatur bzw. eines Keyboards 148 und einer Computermaus 150 eingeben. Andere Eingabevorrichtungen (nicht gezeigt) können ein Mikrofon und/andere Sensoren, einen Joystick, ein Spielpolster bzw. -kissen, einen Scanner oder ähnliches umfassen. Diese oder andere Eingabevorrichtungen können mit der Prozessoreinheit 122 anhand einer seriellen Schnittstelle 152 verbunden sein, welche mit dem System 126 gekoppelt ist, oder können anhand anderer Schnittstellen, wie z.B. einer parallelen Schnittstelle 154, eines Spieleports oder eines universellen seriellen Busses (USB) verbunden sein. Weiterhin kann Information mit einem Drucker 156 gedruckt werden. Der Drucker 156 und andere parallele Eingabe/Ausgabevorrichtungen können mit der Prozessoreinheit 122 durch die parallele Schnittstelle 154 verbunden sein. Ein Monitor 158 oder andere Arten von Anzeigevorrichtung(en) ist/sind mit dem Systembus 126 mittels einer Schnittstelle, wie z.B. eines Videoeingang/-ausgangs 160 verbunden. Zusätzlich zu dem Monitor kann die Rechnerumgebung 120 andere periphere Ausgabevorrichtungen (nicht gezeigt) wie z.B. Lautsprecher oder akustische Ausgänge umfassen.

Die Rechnerumgebung 120 kann mit anderen elektronischen Vorrichtungen z.B. einem Computer, einem Schnurtelefon, einem schnurlosen Telefon, einem persönlichen digitalen Assistenten (PDA), einem Fernseher oder ähnlichem kommunizieren. Um zu kommunizieren, kann die Rechnerumgebung 120 in einer vernetzten Umgebung arbeiten, wobei Verbindungen zu einem oder mehreren elektronischen Vorrichtungen verwendet werden. Fig. 4 stellt die mit einem "remote computer" bzw. entfernten Computer 162 vernetzte Rechnerumgebung dar. Der entfernte Computer 162 kann eine andere Rechnerumgebung, wie z.B. ein Server, ein Router, ein Netzwerk-PC, eine gleichwertige bzw. "peer" Vorrichtung oder andere gewöhnliche Netzwerkknoten sein und kann viele oder alle der hinsichtlich der Rechnerumgebung 120 oben beschriebenen Elemente umfassen. Die logischen Verbindungen, wie sie in Fig. 4 dargestellt sind, umfassen ein "local area network" (LAN) 164 und ein "wide are network" (WAN) 166. Solche Netzwerkumgebungen sind alltäglich in Büros, firmenweiten Computernetzwerken, Intranetzen und dem Internet.

Wenn eine Rechnerumgebung 120 in einer LAN-Netzwerkumgebung verwendet wird, kann die Rechnerumgebung 120 mit dem LAN 164 durch einen Netzwerkeingang/-ausgang 168 verbunden sein. Wenn die Rechnerumgebung 120 in einer WAN-Netzwerkumgebung verwendet wird, kann die Rechnerumgebung 120 ein Modem 170 oder andere Mittel zum Herstellen einer Kommunikation über das WAN 166 umfassen. Das Modem 170, welches intern und extern bezüglich der Rechnerumgebung 120 sein kann, ist mit dem Systembus 126 mittels der seriellen Schnittstelle 152 verbunden. In der Netzwerkumgebung können Programm-Module, welche relativ zu der Rechnerumgebung 120 dargestellt sind, oder Abschnitte davon in einer entfernten Speichereinrichtung gespeichert sein, welche an oder von einem entfernten Computer 162 zugreifbar bzw. systemeigen sind. Weiterhin können andere Daten, welche für das oben beschriebene Verfahren bzw. System relevant sind, auf oder von dem entfernten Computer 162 zugreifbar vorliegen.

### Bezugszeichenliste

- 10: Bilddatenbank
- 12a, ... 12f: Bildbereichsdatensätze der Bilddatenbank
- 14: Frontalbilddatensatz
- 16: Profilbilddatensatz
- 18a, ... 18f: Bildbereichsdatensätze des Frontalbilddatensatzes
- 20a, ... 20f: Bildbereichsdatensätze des Profilbilddatensatzes
- 22: Frontalbildausgabebereich
- 24: Profilbildausgabebereich
- 26a, ... 26f: Frontalbilddatenelemente
- 28a, ... 28f: Profilbilddatenelemente
- 30: erste fotografische Aufnahme
- 32: zweite fotografische Aufnahme
- 40: Mittellinie (Profillinie)
- 42-50: Bearbeitungsbereiche
- 120: Rechnerumgebung
- 122: Prozessoreinheit
- 124: Systemspeicher
- 126: Systembus
- 128: random access memory (RAM)
- 130: Nur-Lesespeicher (ROM)
- 132: Festplattenlaufwerk
- 134: Disklaufwerk
- 136: entfernbare Disk
- 138: Festplattenlaufwerkschnittstelle
- 140: Disklaufwerkschnittstelle
- 142: externe Disk
- 144: Applikationsprogramm
- 146: Programmdaten
- 148: Tastatur
- 150: Computermaus
- 152: serielle Schnittstelle
- 154: parallele Schnittstelle
- 156: Drucker
- 158: Monitor
- 160: Videoeingang/ -ausgang
- 162: entfernter Computer
- 164: "local area network" (LAN)
- 166: "wide are network" (WAN)
- 168: Netzwerkeingang/ -ausgang

## Patentansprüche

1. Computer-implementiertes Verfahren zur Erstellung von Phantombildern, umfassend:
- Bereitstellen einer Bilddatenbank (10), welche eine Vielzahl von ersten Bilddatenelementen umfasst, wobei jedes erste Bilddatenelement einen Gesichtsausschnitt eines menschlichen Gesichts in einer ersten Perspektive darstellt und wobei die Bilddatenbank (10) zu jedem ersten Bilddatenelement ein korrespondierendes zweites Bilddatenelement derart umfasst, dass das zweite Bilddatenelement zumindest teilweise denselben Gesichtsausschnitt desselben menschlichen Gesichts in einer zweiten Perspektive darstellt;
- Erfassen einer Benutzereingabe zur Auswahl eines ersten Bilddatenelements (26a) eines ersten Gesichtsausschnitts eines menschlichen Gesichts;
- Erfassen einer Benutzereingabe zur Auswahl eines ersten Bilddatenelements eines zweiten Gesichtsausschnitts (26b) eines menschlichen Gesichts;
- grafisches Darstellen der ausgewählten ersten Bilddatenelemente in einem ersten Anzeigebereich (22) einer grafischen Benutzerschnittstelle;
- Ermitteln der zu den ausgewählten ersten Bilddatenelementen (26a, 26b, ... 26e) korrespondierenden zweiten Bilddatenelemente (28a, 28b, ... 28e); und
- grafisches Darstellen der ermittelten zweiten Bilddatenelemente (28a, 28b, ... 28e) in einem zweiten Anzeigebereich (24) der grafischen Benutzerschnittstelle, wobei eine der ersten und zweiten Perspektive eine Teilprofilansicht und die andere Perspektive eine Frontalansicht darstellt und wobei das Verfahren umfasst:
- Ermitteln eines ersten Bearbeitungsbereichs der Teilprofilansicht, welcher eine erste Gesichtshälfte in der Teilprofilansicht darstellt, und eines dazu korrespondierenden ersten Bearbeitungsbereichs der Frontalansicht, welcher die erste Gesichtshälfte in der Frontalansicht darstellt;
- Ermitteln eines ersten Skalierungsfaktors, welcher eine Skalierung der ersten Gesichtshälfte zwischen der Frontalansicht und der Teilprofilansicht festlegt;
- Erfassen einer Benutzereingabe zur grafischen Bearbeitung der Darstellung im ersten Bearbeitungsbereich der Teilprofilansicht oder der Frontalansicht, welche ein Verschieben zumindest eines Pixels der Darstellung im ersten Bearbeitungsbereich der Teilprofilansicht bzw. der Frontalansicht und/oder eines im ersten Bearbeitungsbereich der Teilprofilansicht bzw. der Frontalansicht dargestellten primären Bearbeitungswerkzeugs um eine durch die Benutzereingabe festgelegte primäre Positionsänderung umfasst, welche eine primäre horizontale und/oder eine primäre vertikalen Komponente der Positionsänderung aufweist;
- Verschieben zumindest eines Pixels der Darstellung im ersten Bearbeitungsbereich der Frontalansicht bzw. der Teilprofilansicht bzw. eines im ersten Bearbeitungsbereich der Frontalansicht bzw. der Teilprofilansicht dargestellten sekundären Bearbeitungswerkzeugs um eine in Abhängigkeit von der Benutzereingabe und dem ersten Skalierungsfaktor ermittelten sekundären Positionsänderung, welche eine sekundäre horizontale und/oder eine sekundäre vertikale Komponente derart aufweist, dass die sekundäre horizontale Komponente der um den ersten Skalierungsfaktorskalierten primären horizontalen Komponente entspricht und die sekundäre vertikale Komponente der primären vertikalen Komponente entspricht.

2. Computer-implementiertes Verfahren zur Erstellung von Phantombildern, umfassend:
- Bereitstellen einer Bilddatenbank (10), welche eine Vielzahl von ersten Bilddatenelementen umfasst, wobei jedes erste Bilddatenelement einen Gesichtsausschnitt eines menschlichen Gesichts in einer ersten Perspektive darstellt und wobei die Bilddatenbank (10) zu jedem ersten Bilddatenelement ein korrespondierendes zweites Bilddatenelement derart umfasst, dass das zweite Bilddatenelement zumindest teilweise denselben Gesichtsausschnitt desselben menschlichen Gesichts in einer zweiten Perspektive darstellt;
- Erfassen einer Benutzereingabe zur Auswahl eines ersten Bilddatenelements (26a) eines ersten Gesichtsausschnitts eines menschlichen Gesichts;
- Erfassen einer Benutzereingabe zur Auswahl eines ersten Bilddatenelements eines zweiten Gesichtsausschnitts (26b) eines menschlichen Gesichts;
- grafisches Darstellen der ausgewählten ersten Bilddatenelemente in einem ersten Anzeigebereich (22) einer grafischen Benutzerschnittstelle;
- Ermitteln der zu den ausgewählten ersten Bilddatenelementen (26a, 26b, ... 26e) korrespondierenden zweiten Bilddatenelemente (28a, 28b, ... 28e); und
- grafisches Darstellen der ermittelten zweiten Bilddatenelemente (28a, 28b, ... 28e) in einem zweiten Anzeigebereich (24) der grafischen Benutzerschnittstelle, wobei zumindest eine der ersten und zweiten Perspektive eine Teilprofilansicht darstellt und wobei das Verfahren umfasst:
- Ermitteln eines ersten Bearbeitungsbereichs der Teilprofilansicht , welcher eine in Betrachtungsrichtung teilweise abgewandte Gesichtshälfte darstellt, und eines zweiten Bearbeitungsbereichs der Teilprofilansicht , welcher eine in Betrachtungsrichtung zugewandte Gesichtshälfte darstellt;
- Ermitteln eines Skalierungsfaktors, welcher in der Teilprofilansicht eine Skalierung zwischen der in Betrachtungsrichtung teilweise abgewandten Gesichtshälfte und der in Betrachtungsrichtung zugewandten Gesichtshälfte festlegt;
- Erfassen einer Benutzereingabe zur grafischen Bearbeitung der Darstellung im ersten oder zweiten Bearbeitungsbereich, welche ein Verschieben zumindest eines Pixels der Darstellung im ersten bzw. zweiten Bearbeitungsbereich und/oder eines im ersten bzw. zweiten Bearbeitungsbereich dargestellten primären Bearbeitungswerkzeugs um eine durch die Benutzereingabe festgelegte primäre Positionsänderung umfasst, welche eine primäre horizontale und/oder eine primäre vertikalen Komponente der Positionsänderung aufweist;
- Verschieben zumindest eines Pixels der Darstellung im zweiten bzw. ersten Bearbeitungsbereich bzw. eines im zweiten bzw. ersten Bearbeitungsbereich dargestellten sekundären Bearbeitungswerkzeugs um eine in Abhängigkeit von der Benutzereingabe und dem Skalierungsfaktor ermittelten sekundären Positionsänderung, welche eine sekundäre horizontale und/oder eine sekundäre vertikale Komponente derart aufweist, dass die sekundäre horizontale Komponente der um den Skalierungsfaktor skalierten primären horizontalen Komponente entspricht und die sekundäre vertikale Komponente der primären vertikalen Komponente entspricht.

3. Verfahren nach einem der vorangegangenen Ansprüche, welches außerdem umfasst:
- Erfassen einer Benutzereingabe zur Positionierung und/oder Orientierung und/oder Dimensionierung der Darstellung des ersten Bilddatenelements (26b) des zweiten Gesichtsausschnitts im ersten Anzeigebereich (22) relativ zur Darstellung des ersten Bilddatenelements (26a) des ersten Gesichtsausschnitts im ersten Anzeigebereich (22); und
- Anpassen der Positionierung bzw. Orientierung bzw. Dimensionierung der Darstellung des korrespondierenden zweiten Bilddatenelements (28b) des zweiten Gesichtsausschnitts im zweiten Anzeigebereich (24) relativ zur Darstellung des zweiten Bilddatenelements (28a) des ersten Gesichtsausschnitts im zweiten Anzeigebereich (24) in Abhängigkeit von der erfassten Benutzereingabe zur Positionierung und/oder Orientierung und/oder Dimensionierung im ersten Anzeigebereich (22).

4. Verfahren nach einem der vorangegangenen Ansprüche, wobei die Bilddatenbank (10) derart bereitgestellt wird, dass sie eine Vielzahl von Bildbereichsdatensätzen (12a, 12b, ... 12e) umfasst, von denen jeder eine Vielzahl von Bilddatenelementen derart umfasst, dass die in verschiedenen Bildbereichsdatensätzen (12a, 12b, ... 12e) enthalten Bilddatenelemente verschiedene Gesichtsausschnitte menschlicher Gesichter darstellen, während verschiedene Bilddatenelemente innerhalb eines Bildbereichsdatensatzes (12a, 12b, ... 12e) im Wesentlichen denselben Gesichtsausschnitt von unterschiedlichen menschlichen Gesichtern darstellen.

5. Verfahren nach einem der vorangegangenen Ansprüche, welches außerdem umfasst:
- ein Aktivieren eines 2D-Editiermodus, bei dem während des Erfassens von Benutzereingaben zur Auswahl und/oder zur Positionierung und/oder Orientierung und/oder Dimensionierung erster Bilddatenelemente zwar der erste Anzeigebereich (22) nicht aber der zweite Anzeigebereich (24) grafisch dargestellt wird; und/oder
- ein Aktivieren eines 3D-Editiermodus, bei dem während des Erfassens von Benutzereingaben zur Auswahl und/oder zur Positionierung und/oder Orientierung und/ oder Dimensionierung erster Bilddatenelemente der erste Anzeigebereich (22) und der zweite Anzeigebereich (24) gleichzeitig grafisch dargestellt werden, wobei das Verfahren vorzugsweise außerdem umfasst:
-- Erfassen einer Benutzereingabe zur Positionierung und/oder Orientierung und/oder Dimensionierung der Darstellung des zweiten Bilddatenelements (28b) des zweiten Gesichtsausschnitts im zweiten Anzeigebereich (24) relativ zur Darstellung des zweiten Bilddatenelements (28a) des ersten Gesichtsausschnitts im zweiten Anzeigebereich (24);
und
-- Anpassen der Positionierung bzw. Orientierung bzw. Dimensionierung der Darstellung des korrespondierenden ersten Bilddatenelements (26b) des zweiten Gesichtsausschnitts im ersten Anzeigebereich (22) relativ zur Darstellung des ersten Bilddatenelements (26a) des ersten Gesichtsausschnitts im ersten Anzeigebereich (22) in Abhängigkeit von der erfassten Benutzereingabe zur Positionierung und/oder Orientierung und/oder Dimensionierung im zweiten Anzeigebereich (24).

6. Verfahren nach einem der vorangegangenen Ansprüche, wobei die Bilddatenbank (10) derart bereitgestellt wird, dass die erste und/oder zweite und/oder eine dritte Perspektive eine Frontalansicht und/oder eine Profilansicht und/oder eine Halbprofilansicht des jeweiligen menschlichen Gesichts umfassen.

7. Verfahren nach einem der vorangegangenen Ansprüche, umfassend:
- Erstellen eines 3D-Modells eines menschlichen Gesichts aus den ausgewählten ersten Bilddatenelementen und den ermittelten dazu korrespondierenden zweiten und/oder dritten Bilddatenelementen; und
- grafisches Darstellen des 3D-modellierten menschlichen Gesichts in einer weiteren, von der ersten und zweiten Perspektive abweichenden Perspektive.

8. Computersystem zur Erstellung von Phantombildern, umfassend:
- eine Bilddatenbank (10), welche eine Vielzahl von ersten Bilddatenelementen umfasst, wobei jedes erste Bilddatenelement einen Gesichtsausschnitt eines menschlichen Gesichts in einer ersten Ansicht/Perspektive darstellt und wobei die Bilddatenbank zu jedem ersten Bilddatenelement ein korrespondierendes zweites Bilddatenelement derart umfasst, dass das zweite Bilddatenelement zumindest teilweise denselben Gesichtsausschnitt desselben menschlichen Gesichts in einer zweiten Ansicht/ Perspektive darstellt;
- eine Eingabeschnittstelle, welche ausgelegt ist,
-- zum Erfassen einer Benutzereingabe zur Auswahl eines ersten Bilddatenelements (26a) eines ersten Gesichtsausschnitts eines menschlichen Gesichts; und
-- zum Erfassen einer Benutzereingabe zur Auswahl eines ersten Bilddatenelements (26b) eines zweiten Gesichtsausschnitts eines menschlichen Gesichts;
- eine Datenverarbeitungseinrichtung zum Ermitteln der zu den ausgewählten ersten Bilddatenelementen korrespondierenden zweiten Bilddatenelemente (28a, 28b); und
- eine grafische Ausgabeschnittstelle, welche ausgelegt ist,
-- zum grafischen Darstellen der ausgewählten ersten Bilddatenelemente in einem ersten Anzeigebereich (22); und
-- zum grafischen Darstellen der ermittelten zweiten Bilddatenelemente in einem zweiten Anzeigebereich (24),
wobei eine der ersten und zweiten Perspektive eine Teilprofilansicht und die andere Perspektive eine Frontalansicht darstellt und wobei das Computersystem ferner ausgelegt ist:
- zum Ermitteln eines ersten Bearbeitungsbereichs der Teilprofilansicht, welcher eine erste Gesichtshälfte in der Teilprofilansicht darstellt, und eines dazu korrespondierenden ersten Bearbeitungsbereichs der Frontalansicht, welcher die erste Gesichtshälfte in der Frontalansicht darstellt;
- zum Ermitteln eines ersten Skalierungsfaktors, welcher eine Skalierung der ersten Gesichtshälfte zwischen der Frontalansicht und der Teilprofilansicht festlegt;
- zum Erfassen einer Benutzereingabe zur grafischen Bearbeitung der Darstellung im ersten Bearbeitungsbereich der Teilprofilansicht oder der Frontalansicht, welche ein Verschieben zumindest eines Pixels der Darstellung im ersten Bearbeitungsbereich der Teilprofilansicht bzw. der Frontalansicht und/oder eines im ersten Bearbeitungsbereich der Teilprofilansicht bzw. der Frontalansicht dargestellten primären Bearbeitungswerkzeugs um eine durch die Benutzereingabe festgelegte primäre Positionsänderung umfasst, welche eine primäre horizontale und/oder eine primäre vertikalen Komponente der Positionsänderung aufweist;
- zum Verschieben zumindest eines Pixels der Darstellung im ersten Bearbeitungsbereich der Frontalansicht bzw. der Teilprofilansicht bzw. eines im ersten Bearbeitungsbereich der Frontalansicht bzw. der Teilprofilansicht dargestellten sekundären Bearbeitungswerkzeugs um eine in Abhängigkeit von der Benutzereingabe und dem ersten Skalierungsfaktor ermittelten sekundären Positionsänderung, welche eine sekundäre horizontale und/oder eine sekundäre vertikale Komponente derart aufweist, dass die sekundäre horizontale Komponente der um den ersten Skalierungsfaktor skalierten primären horizontalen Komponente entspricht und die sekundäre vertikale Komponente der primären vertikalen Komponente entspricht.

9. Computersystem zur Erstellung von Phantombildern, umfassend:
- eine Bilddatenbank (10), welche eine Vielzahl von ersten Bilddatenelementen umfasst, wobei jedes erste Bilddatenelement einen Gesichtsausschnitt eines menschlichen Gesichts in einer ersten Ansicht/Perspektive darstellt und wobei die Bilddatenbank zu jedem ersten Bilddatenelement ein korrespondierendes zweites Bilddatenelement derart umfasst, dass das zweite Bilddatenelement zumindest teilweise denselben Gesichtsausschnitt desselben menschlichen Gesichts in einer zweiten Ansicht/ Perspektive darstellt;
- eine Eingabeschnittstelle, welche ausgelegt ist,
-- zum Erfassen einer Benutzereingabe zur Auswahl eines ersten Bilddatenelements (26a) eines ersten Gesichtsausschnitts eines menschlichen Gesichts; und
-- zum Erfassen einer Benutzereingabe zur Auswahl eines ersten Bilddatenelements (26b) eines zweiten Gesichtsausschnitts eines menschlichen Gesichts;
- eine Datenverarbeitungseinrichtung zum Ermitteln der zu den ausgewählten ersten Bilddatenelementen korrespondierenden zweiten Bilddatenelemente (28a, 28b); und
- eine grafische Ausgabeschnittstelle, welche ausgelegt ist,
-- zum grafischen Darstellen der ausgewählten ersten Bilddatenelemente in einem ersten Anzeigebereich (22); und
-- zum grafischen Darstellen der ermittelten zweiten Bilddatenelemente in einem zweiten Anzeigebereich (24),
wobei zumindest eine der ersten und zweiten Perspektive eine Teilprofilansicht darstellt und wobei das Computersystem ferner ausgelegt ist:
- zum Ermitteln eines ersten Bearbeitungsbereichs der Teilprofilansicht , welcher eine in Betrachtungsrichtung teilweise abgewandte Gesichtshälfte darstellt, und eines zweiten Bearbeitungsbereichs der Teilprofilansicht, welcher eine in Betrachtungsrichtung zugewandte Gesichtshälfte darstellt;
- zum Ermitteln eines Skalierungsfaktors, welcher in der Teilprofilansicht eine Skalierung zwischen der in Betrachtungsrichtung teilweise abgewandten Gesichtshälfte und der in Betrachtungsrichtung zugewandten Gesichtshälfte festlegt;
- zum Erfassen einer Benutzereingabe zur grafischen Bearbeitung der Darstellung im ersten oder zweiten Bearbeitungsbereich, welche ein Verschieben zumindest eines Pixels der Darstellung im ersten bzw. zweiten Bearbeitungsbereich und/oder eines im ersten bzw. zweiten Bearbeitungsbereich dargestellten primären Bearbeitungswerkzeugs um eine durch die Benutzereingabe festgelegte primäre Positionsänderung umfasst, welche eine primäre horizontale und/oder eine primäre vertikalen Komponente der Positionsänderung aufweist;
- zum Verschieben zumindest eines Pixels der Darstellung im zweiten bzw. ersten Bearbeitungsbereich bzw. eines im zweiten bzw. ersten Bearbeitungsbereich dargestellten sekundären Bearbeitungswerkzeugs um eine in Abhängigkeit von der Benutzereingabe und dem Skalierungsfaktor ermittelten sekundären Positionsänderung, welche eine sekundäre horizontale und/oder eine sekundäre vertikale Komponente derart aufweist, dass die sekundäre horizontale Komponente der um den Skalierungsfaktor skalierten primären horizontalen Komponente entspricht und die sekundäre vertikale Komponente der primären vertikalen Komponente entspricht.

10. Computerprogrammprodukt, welches maschinenlesbaren Programmcode umfasst, der, wenn er geladen wird auf einem Computer, zur Ausführung eines Verfahrens gemäß einem der Ansprüche 1 bis 7 geeignet ist.

## Claims

1. A computer-implemented method of constructing facial composites, comprising:
- providing an image database (10) comprising a plurality of first image data elements, wherein each first image data element represents a part of the face of a human face in a first perspective, and wherein for every first image data element the image database (10) comprises a corresponding second image data element such that the second image data element represents at least partially the same part of the face of the same human face in a second perspective;
- acquiring a user input for selection of a first image data element (26a) of a first part of the face of a human face;
- acquiring a user input for selection of a first image data element of a second part (26b) of the face of a human face;
- graphically representing the selected first image data elements in a first display area (22) of a graphical user interface;
- determining the corresponding second image data elements (28a, 28b, ... 28e) corresponding to the selected first image data elements (26a, 26b, ... 26e); and
- graphically representing the determined second image data elements (28a, 28b, ... 28e) in a second display area (24) of the graphical user interface,
wherein one of the first and second perspectives represents a partial profile view, and the other perspective represents a front view, and wherein the method comprises:
- determining a first editing area of the partial profile view, which represents a first side of the face in the partial profile view, and a corresponding first editing area of the front view, which represents the first side of the face in the front view;
- determining a first scaling factor that specifies a scaling of the first side of the face between the front view and the partial profile view;
- acquiring a user input for graphically editing the representation in the first editing area of the partial profile view or the front view, which comprises shifting at least one pixel of the representation in the first editing area of the partial profile view or the front view and/or a primary editing tool represented in the first editing area of the partial profile view or the front view by a primary position change stipulated by the user input, which includes a primary horizontal and/or a primary vertical component of the position change;
- shifting at least one pixel of the representation in the first editing area of the front view or partial profile view or a secondary editing tool represented in the first editing area of the front view or partial profile view by a secondary position change determined depending on the user input and the first scaling factor, which includes a secondary horizontal and/or a secondary vertical component such that the secondary horizontal component corresponds to the primary horizontal component scaled by the first scaling factor and the secondary vertical component corresponds to the primary vertical component.

2. A computer-implemented method of constructing facial composites, comprising:
- providing an image database (10) comprising a plurality of first image data elements, wherein each first image data element represents a part of the face of a human face in a first perspective, and wherein for every first image data element the image database (10) comprises a corresponding second image data element such that the second image data element represents at least partially the same part of the face of the same human face in a second perspective;
- acquiring a user input for selection of a first image data element (26a) of a first part of the face of a human face;
- acquiring a user input for selection of a first image data element of a second part (26b) of the face of a human face;
- graphically representing the selected first image data elements in a first display area (22) of a graphical user interface;
- determining the corresponding second image data elements (28a, 28b, ... 28e) corresponding to the selected first image data elements (26a, 26b, ... 26e); and
- graphically representing the determined second image data elements (28a, 28b, ... 28e) in a second display area (24) of the graphical user interface,
wherein at least one of the first and second perspectives represents a partial profile view, and wherein the method comprises:
- determining a first editing area of the partial profile view, which represents a side of the face partially averted in a viewing direction, and a second editing area of the partial profile view, which represents a side of the face facing toward the viewing direction;
- determining a scaling factor which specifies a scaling in the partial profile view between the side of the face partially adverting the viewing direction and the side of the face facing toward the viewing direction;
- acquiring a user input for graphically editing the representation in the first editing area, which comprises shifting at least one pixel of the representation in the first or second editing area and/or a primary editing tool represented in the first or second editing area by a primary position change stipulated by the user input, which includes a primary horizontal and/or a primary vertical component of the position change;
- shifting at least one pixel of the representation in the second or first editing area or a secondary editing tool represented in the second or first editing area by a secondary position change determined depending on the user input and the scaling factor, which includes a secondary horizontal and/or a secondary vertical component such that the secondary horizontal component corresponds to the primary horizontal component scaled by the scaling factor and the secondary vertical component corresponds to the primary vertical component.

3. The method according to one of the preceding claims, which further comprises:
- acquiring a user input for positioning and/or orienting and/or dimensioning the representation of the first image data element (26b) of the second part of the face in the first display area (22) relative to the representation of the first image data element (26a) of the first part of the face in the first display area (22); and
- adapting the position or orientation or dimension of the representation of the corresponding second image data element (28b) of the second part of the face in the second display area (24) relative to the representation of the second image data element (28a) of the first part of the face in the second display area (24) depending on the acquired user input for positioning and/or orienting and/or dimensioning in the first display area (22).

4. The method according to one of the preceding claims, wherein the image database (10) is provided such that it comprises a plurality of image area data sets (12a, 12b, ... 12e), each of which comprises a plurality of image data elements such that image data elements included in different image area data sets (12a, 12b, ... 12e) represent different parts of the face of human faces, while different image data elements within one image area data set (12a, 12b, ... 12e) represent substantially the same part of the face of different human faces.

5. The method according to one of the preceding claims, which further comprises:
- activating a 2D editing mode in which during the acquisition of user inputs for selecting and/or for positioning and/or orienting and/or dimensioning first image data elements, the first display area (22), but not the second display area (24) is represented graphically; and/or
- activating a 3D editing mode in which during the acquisition of user inputs for selecting and/or for positioning and/or orienting and/or dimensioning first image data elements, the first display area (22) and the second display area (24) are represented graphically at the same time, wherein the method preferably further comprises:
-- acquiring a user input for positioning and/or orienting and/or dimensioning the representation of the second image data element (28b) of the second part of the face in the second display area (24) relative to the representation of the second image data element (28a) of the first part of the face in the second display area (24); and
-- adapting the position or orientation or dimension of the representation of the corresponding first image data element (26b) of the second part of the face in the first display area (22) relative to the representation of the first image data element (26a) of the first part of the face in the first display area (22) depending on the acquired user input for positioning and/or orienting and/or dimensioning in the second display area (24).

6. The method according to one of the preceding claims, wherein the image database (10) is provided such that the first and/or second and/or a third perspective(s) comprise a front view and/or a profile view and/or a semiprofile view of the respective human face.

7. The method according to one of the preceding claims, comprising:
- constructing a 3D model of a human face from the selected first image data elements and the determined corresponding second and/or third image data elements; and
- graphically representing the 3D-modelled human face in a further perspective different from the first and second perspectives.

8. A computer system for constructing facial composites, comprising:
- an image database (10) comprising a plurality of first image data elements, wherein each first image data element represents a part of the face of a human face in a first view/perspective, and wherein for every first image data element the image database comprises a corresponding second image data element such that the second image data element represents at least partially the same part of the face of the same human face in a second view/perspective;
- an input interface adapted to
-- acquire a user input for selection of a first image data element (26a) of a first part of the face of a human face; and
-- acquire a user input for selection of a first image data element (26b) of a second part of the face of a human face;
- a data processing device for determining the corresponding second image data elements corresponding to the selected first image data elements (28a, 28b); and
- a graphical output interface adapted to
-- graphically illustrate the selected first image data elements in a first display area (22); and
-- graphically illustrate the determined second image data elements in a second display area (24),
wherein one of the first and second perspectives represents a partial profile view, and the other perspective represents a front view, and wherein the computer system is further adapted to
- determine a first editing area of the partial profile view, which represents a first side of the face in the partial profile view, and a corresponding first editing area of the front view, which represents the first side of the face in the front view;
- determine a first scaling factor that specifies a scaling of the first side of the face between the front view and the partial profile view;
- acquire a user input for graphically editing the representation in the first editing area of the partial profile view or the front view, which comprises shifting at least one pixel of the representation in the first editing area of the partial profile view or the front view and/or a primary editing tool represented in the first editing area of the partial profile view or the front view by a primary position change stipulated by the user input, which includes a primary horizontal and/or a primary vertical component of the position change;
- shift at least one pixel of the representation in the first editing area of the front view or partial profile view or a secondary editing tool represented in the first editing area of the front view or partial profile view by a secondary position change determined depending on the user input and the first scaling factor, which includes a secondary horizontal and/or a secondary vertical component such that the secondary horizontal component corresponds to the primary horizontal component scaled by the first scaling factor and the secondary vertical component corresponds to the primary vertical component.

9. A computer system for constructing facial composites, comprising:
- an image database (10) comprising a plurality of first image data elements, wherein each first image data element represents a part of the face of a human face in a first view/perspective, and wherein for every first image data element the image database comprises a corresponding second image data element such that the second image data element represents at least partially the same part of the face of the same human face in a second view/perspective;
- an input interface adapted to
-- acquire a user input for selection of a first image data element (26a) of a first part of the face of a human face; and
-- acquire a user input for selection of a first image data element (26b) of a second part of the face of a human face;
- a data processing device for determining the corresponding second image data elements corresponding to the selected first image data elements (28a, 28b); and
- a graphical output interface adapted to
-- graphically illustrate the selected first image data elements in a first display area (22); and
-- graphically illustrate the determined second image data elements in a second display area (24),
wherein at least one of the first and second perspectives represents a partial profile view, and wherein the computer system if further adapted to
- determine a first editing area of the partial profile view, which represents a side of the face partially averted in a viewing direction, and a second editing area of the partial profile view, which represents a side of the face facing toward the viewing direction;
- determine a scaling factor which specifies a scaling in the partial profile view between the side of the face partially adverting the viewing direction and the side of the face facing toward the viewing direction;
- acquire a user input for graphically editing the representation in the first editing area, which comprises shifting at least one pixel of the representation in the first or second editing area and/or a primary editing tool represented in the first or second editing area by a primary position change stipulated by the user input, which includes a primary horizontal and/or a primary vertical component of the position change;
- shift at least one pixel of the representation in the second or first editing area or a secondary editing tool represented in the second or first editing area by a secondary position change determined depending on the user input and the scaling factor, which includes a secondary horizontal and/or a secondary vertical component such that the secondary horizontal component corresponds to the primary horizontal component scaled by the scaling factor and the secondary vertical component corresponds to the primary vertical component.

10. A computer program product, which comprises machine-readable program code which, when loaded on a computer, is suitable for executing a method according to one of claims 1 to 7.

## Revendications

1. Procédé mis en oeuvre par ordinateur pour la génération de portraits-robots, comprenant le fait de :
- fournir une base de données d'image (10), comprenant une pluralité de premiers éléments de données d'image, sachant que chaque premier élément de données d'image représente une partie de visage d'un visage humain dans une première perspective, et sachant que la base de données d'image (10) comprend pour chaque premier élément de données d'image un deuxième élément de données d'image correspondant, de manière que le deuxième élément de données d'image représente au moins partiellement la même partie de visage du même visage humain dans une deuxième perspective ;
- détecter une entrée utilisateur pour la sélection d'un premier élément de données d'image (26a) d'une première partie de visage d'un visage humain ;
- détecter une entrée utilisateur pour la sélection d'un premier élément de données d'image d'une deuxième partie de visage (26b) d'un visage humain ;
- représenter graphiquement des premiers éléments de données d'image sélectionnés dans une première zone d'affichage (22) d'une interface utilisateur graphique ;
- déterminer les deuxièmes éléments de données d'image (28a, 28b, ... 28e) correspondant aux premiers éléments de données d'image (26a, 26b, ... 26e) sélectionnés ; et
- représenter graphiquement les deuxièmes éléments de données d'image (28a, 28b, ... 28e) déterminés, dans une deuxième zone d'affichage (24) de l'interface utilisateur graphique,
sachant qu'une parmi la première et la deuxième perspective représente une vue de profil partiel (*Teilprofilansicht*) et que l'autre perspective représente une vue frontale, et que le procédé comprend le fait de :
- déterminer une première zone de traitement de la vue de profil partiel, qui représente une première moitié du visage en vue de profil partiel, et une correspondante première zone de traitement de la vue frontale, laquelle représente la première moitié du visage en vue frontale ;
- déterminer un premier facteur d'échelle, qui spécifie une mise à l'échelle de la première moitié de visage entre la vue frontale et la vue de profil partiel ;
- détecter une entrée utilisateur pour un traitement graphique de la représentation dans la première zone de traitement de la vue de profil partiel ou de la vue frontale, qui comprend un déplacement d'au moins un pixel de la représentation dans la première zone de traitement de la vue de profil partiel ou de la vue frontale et/ou d'un outil de traitement primaire représenté dans la première zone de traitement de la vue de profil partiel ou de la vue frontale, pour un changement primaire de position spécifié par une entrée utilisateur, lequel présente une composante primaire horizontale et/ou une composante primaire verticale du changement de position ;
- déplacer au moins un pixel de la représentation dans la première zone de traitement de la vue frontale ou encore de la vue de profil partiel ou encore d'un outil secondaire de traitement représenté dans la première zone de traitement de la vue frontale ou encore de la vue de profil partiel, pour un changement secondaire de position déterminé en fonction de l'entrée utilisateur et du premier facteur d'échelle, lequel présente une composante secondaire horizontale et/ou une composante secondaire verticale, de manière que la composante secondaire horizontale corresponde à la composante primaire horizontale mise à l'échelle par le facteur d'échelle primaire, et que la composante secondaire verticale corresponde à la composante primaire verticale.

2. Procédé mis en oeuvre par ordinateur pour la génération de portraits-robots, comprenant le fait de :
- fournir une base de données d'image (10), comprenant une pluralité de premiers éléments de données d'image, sachant que chaque premier élément de données d'image représente une partie de visage d'un visage humain dans une première perspective, et sachant que la base de données d'image (10) comprend pour chaque premier élément de données d'image un deuxième élément de données d'image correspondant, de manière que le deuxième élément de données d'image représente au moins partiellement la même partie de visage du même visage humain dans une deuxième perspective ;
- détecter une entrée utilisateur pour la sélection d'un premier élément de données d'image (26a) d'une première partie de visage d'un visage humain ;
- détecter une entrée utilisateur pour la sélection d'un premier élément de données d'image d'une deuxième partie de visage (26b) d'un visage humain ;
- représenter graphiquement des premiers éléments de données d'image sélectionnés dans une première zone d'affichage (22) d'une interface utilisateur graphique ;
- déterminer les deuxièmes éléments de données d'image (28a, 28b, ... 28e) correspondant aux premiers éléments de données d'image (26a, 26b, ... 26e) sélectionnés ; et
- représenter graphiquement les deuxièmes éléments de données d'image (28a, 28b, ... 28e) déterminés dans une deuxième zone d'affichage (24) de l'interface utilisateur graphique,
sachant qu'au moins une parmi la première et la deuxième perspective représente une vue de profil partiel, et sachant que le procédé comprend le fait de :
- déterminer une première zone de traitement de la vue de profil partiel, qui représente une moitié du visage partiellement détournée en direction d'observation, et une deuxième zone de traitement de la vue de profil partiel, qui représente une moitié du visage orientée vers la direction d'observation ;
- déterminer un facteur d'échelle, qui spécifie dans la vue de profil partiel une mise à l'échelle entre la moitié de visage partiellement détournée en direction d'observation et la moitié de visage orientée vers la direction d'observation ;
- détecter une entrée utilisateur pour un traitement graphique de la représentation dans la première ou la deuxième zone de traitement, qui comprend un déplacement d'au moins un pixel de la représentation dans la première ou la deuxième zone de traitement et/ou d'un outil de traitement primaire représenté dans la première ou la deuxième zone de traitement, pour un changement primaire de position spécifié par l'entrée utilisateur, lequel présente une composante primaire horizontale et/ou une composante primaire verticale du changement de position ;
- déplacer au moins un pixel de la représentation dans la deuxième ou la première zone de traitement ou encore d'un outil secondaire de traitement représenté dans la deuxième ou la première zone de traitement, pour un changement secondaire de position déterminé en fonction de l'entrée utilisateur et du premier facteur d'échelle, lequel présente une composante secondaire horizontale et/ou une composante secondaire verticale, de manière que la composante secondaire horizontale corresponde à la composante primaire horizontale mise à l'échelle par le facteur d'échelle, et que la composante secondaire verticale corresponde à la composante primaire verticale.

3. Procédé d'après une des revendications précédentes, qui comprend en outre le fait de :
- détecter une entrée utilisateur pour un positionnement et/ou une orientation et/ou un dimensionnement de la représentation du premier élément de données d'image (26b) de la deuxième partie de visage dans la première zone d'affichage (22) par rapport à la représentation du premier élément de données d'image (26a) de la première partie de visage dans la première zone d'affichage (22) ; et
- adapter le positionnement ou encore l'orientation ou encore le dimensionnement de la représentation du deuxième élément de données d'image (28b) correspondant de la deuxième partie de visage dans la deuxième zone d'affichage (24) par rapport à la représentation du deuxième élément de données d'image (28a) de la première partie de visage dans la deuxième zone d'affichage (24) en fonction de l'entrée utilisateur détectée concernant le positionnement et/ou l'orientation et/ou le dimensionnement dans la première zone d'affichage (22).

4. Procédé d'après une des revendications précédentes, sachant que la base de données d'image (10) est fournie de manière à comprendre une pluralité d'ensembles de données de zone d'image (12a, 12b, ... 12e), dont chacun comprend une pluralité d'éléments de données d'image, de manière que les éléments de données d'image contenus dans différents ensembles de données de zone d'image (12a, 12b, ... 12e) représentent différentes parties de visage de visages humains, tandis que différents éléments de données d'image à l'intérieur d'un ensemble de données de zone d'image (12a, 12b, ... 12e) représentent essentiellement la même partie de visage de différents visages humains.

5. Procédé d'après une des revendications précédentes, qui comprend en outre le fait de :
- activer un mode d'édition en 2D, dans lequel, pendant la détection d'entrées d'utilisateur, la première zone d'affichage (22) est représentée graphiquement pour une sélection et/ou pour le positionnement et/ou pour une orientation et/ou un dimensionnement de premiers éléments de données d'image, mais pas la deuxième zone d'affichage (24) ; et/ou
- activer un mode d'édition en 3D, dans lequel, pendant la détection d'entrées d'utilisateur pour une sélection et/ou pour le positionnement et/ou pour une orientation et/ou un dimensionnement de premiers éléments de données d'image, la première zone d'affichage (22) et la deuxième zone d'affichage (24) sont représentées graphiquement simultanément sachant que le procédé comprend de préférence en outre le fait de :
-- détecter une entrée d'utilisateur pour le positionnement et/ou pour une orientation et/ou un dimensionnement de la représentation du deuxième élément de données d'image (28b) de la deuxième partie de visage dans la deuxième zone d'affichage (24) par rapport à la représentation du deuxième élément de données d'image (28a) de la première partie de visage dans la deuxième zone d'affichage (24) ; et
-- adapter le positionnement ou encore l'orientation ou encore le dimensionnement de la représentation du correspondant premier élément de données d'image (26b) de la deuxième partie de visage dans la première zone d'affichage (22) par rapport à la représentation du premier élément de données d'image (26a) de la première partie de visage dans la première zone d'affichage (22) en fonction de l'entrée utilisateur détectée concernant le positionnement et/ou l'orientation et/ou le dimensionnement dans la deuxième zone d'affichage (24).

6. Procédé d'après une des revendications précédentes, sachant que la base de données d'image (10) est fournie de manière que la première et/ou la deuxième et/ou une troisième perspective comprennent une vue frontale et/ou une vue de profil et/ou une vue de demi-profil du visage humain respectif.

7. Procédé d'après une des revendications précédentes, comprenant le fait de :
- générer un modèle en 3D d'un visage humain à partir des premiers éléments de données d'image sélectionnés et des deuxièmes et/ou troisièmes éléments de données d'image correspondants ; et
- représenter graphiquement le visage humain modélisé en 3D dans une perspective supplémentaire, qui diffère de la première et de la deuxième perspective.

8. Système informatique pour la génération de portraits-robots, comprenant :
- une base de données d'image (10), comprenant une pluralité de premiers éléments de données d'image, sachant que chaque premier élément de données d'image représente une partie de visage d'un visage humain dans une première vue/perspective, et sachant que la base de données comprend pour chaque premier élément de données d'image un deuxième élément de données d'image correspondant, de manière que le deuxième élément de données d'image représente au moins partiellement la même partie de visage du même visage humain dans une deuxième vue/perspective ;
- une interface d'entrée, qui est adaptée
-- pour détecter une entrée utilisateur pour la sélection d'un premier élément de données d'image (26a) d'une première partie de visage d'un visage humain ; et
-- pour détecter une entrée utilisateur pour la sélection d'un premier élément de données d'image (26b) d'une deuxième partie de visage d'un visage humain ;
- un dispositif de traitement de données pour déterminer les deuxièmes éléments de données d'image (28a, 28b) correspondant aux premiers éléments de données d'image sélectionnés ; et
- une interface graphique de sortie, qui est adaptée
-- pour représenter graphiquement des premiers éléments de données d'image sélectionnés dans une première zone d'affichage (22) ; et
-- pour représenter graphiquement les deuxièmes éléments de données d'image déterminés, dans une deuxième zone d'affichage (24),
sachant qu'une parmi la première et la deuxième perspective représente une vue de profil partiel (*Teilprofilansicht*) et que l'autre perspective représente une vue frontale, et que le système est en outre adapté :
- pour déterminer une première zone de traitement de la vue de profil partiel, laquelle représente une première moitié du visage en vue de profil partiel, et une correspondante première zone de traitement de la vue frontale, laquelle représente la première moitié du visage en vue frontale ;
- pour déterminer un premier facteur d'échelle, qui spécifie une mise à l'échelle de la première moitié de visage entre la vue frontale et la vue de profil partiel ;
- pour détecter une entrée utilisateur pour un traitement graphique de la représentation dans la première zone de traitement de la vue de profil partiel ou de la vue frontale, qui comprend un déplacement d'au moins un pixel de la représentation dans la première zone de traitement de la vue de profil partiel ou encore de la vue frontale et/ou d'un outil de traitement primaire représenté dans la première zone de traitement de la vue de profil partiel ou encore de la vue frontale, pour un changement primaire de position spécifié par l'entrée utilisateur, lequel présente une composante primaire horizontale et/ou une composante primaire verticale du changement de position ;
- pour déplacer au moins un pixel de la représentation dans la première zone de traitement de la vue frontale ou encore de la vue de profil partiel ou encore d'un outil secondaire de traitement représenté dans la première zone de traitement de la vue frontale ou encore de la vue de profil partiel, pour un changement secondaire de position déterminé en fonction de l'entrée utilisateur et du premier facteur d'échelle, lequel présente une composante secondaire horizontale et/ou une composante secondaire verticale, de manière que la composante secondaire horizontale corresponde à la composante primaire horizontale mise à l'échelle par le facteur d'échelle primaire, et que la composante secondaire verticale corresponde à la composante primaire verticale.

9. Système informatique pour la génération de portraits-robots, comprenant :
- une base de données d'image (10), comprenant une pluralité de premiers éléments de données d'image, sachant que chaque premier élément de données d'image représente une partie de visage d'un visage humain dans une première vue/perspective, et sachant que la base de données comprend pour chaque premier élément de données d'image un deuxième élément de données d'image correspondant, de manière que le deuxième élément de données d'image représente au moins partiellement la même partie de visage du même visage humain dans une deuxième vue/perspective ;
- une interface d'entrée, qui est adaptée,
-- pour détecter une entrée utilisateur pour la sélection d'un premier élément de données d'image (26a) d'une première partie de visage d'un visage humain ; et
-- pour détecter une entrée utilisateur pour la sélection d'un premier élément de données d'image (26b) d'une deuxième partie de visage d'un visage humain ;
- un dispositif de traitement de données pour déterminer les deuxièmes éléments de données d'image (28a, 28b) qui correspondent aux premiers éléments de données d'image sélectionnés ; et
- une interface graphique de sortie, qui est adaptée,
-- pour représenter graphiquement les premiers éléments de données d'image sélectionnés dans une première zone d'affichage (22) ; et
-- pour représenter graphiquement les deuxièmes éléments de données d'image déterminés, dans une deuxième zone d'affichage (24),
sachant qu'une parmi la première et la deuxième perspective représente une vue de profil partiel (*Teilprofilansicht*) et que le système informatique est en outre adapté :
- pour déterminer une première zone de traitement de la vue de profil partiel, laquelle représente une première moitié du visage partiellement détournée en direction d'observation, et une deuxième zone de traitement de la vue de profil partiel, qui représente une moitié du visage orientée vers la direction d'observation ;
- pour déterminer un facteur d'échelle, qui spécifie dans la vue de profil partiel une mise à l'échelle entre la moitié de visage partiellement détournée en direction d'observation et la moitié de visage orientée vers la direction d'observation ;
- pour détecter une entrée utilisateur pour un traitement graphique de la représentation dans la première ou dans la deuxième zone de traitement, qui comprend un déplacement d'au moins un pixel de la représentation dans la première ou dans la deuxième zone de traitement et/ou d'un outil de traitement primaire représenté dans la première ou dans la deuxième zone de traitement, pour un changement primaire de position spécifié par l'entrée utilisateur, lequel présente une composante primaire horizontale et/ou une composante primaire verticale du changement de position ;
- pour déplacer au moins un pixel de la représentation dans la deuxième ou dans la première zone de traitement ou encore d'un outil secondaire de traitement représenté dans la deuxième ou dans la première zone de traitement, pour un changement secondaire de position déterminé en fonction de l'entrée utilisateur et du premier facteur d'échelle, lequel présente une composante secondaire horizontale et/ou une composante secondaire verticale, de manière que la composante secondaire horizontale corresponde à la composante primaire horizontale mise à l'échelle par le facteur d'échelle primaire, et que la composante secondaire verticale corresponde à la composante primaire verticale.

10. Produit programme informatique, qui comprend un code de programme lisible à la machine, qui est adéquat, quand il est chargé dans un ordinateur, à mettre en oeuvre un procédé d'après une des revendications de 1 à 7.
